(19) Europäisches Patentamt / European Patent Office / Office européen des brevets

(11) **EP 4 787 730 A1**

(12) **EUROPEAN PATENT APPLICATION**
published in accordance with Art. 153(4) EPC

(43) Date of publication:
**05.08.2026 Bulletin 2026/32**

(21) Application number: **24886263.3**

(22) Date of filing: **30.10.2024**

(51) International Patent Classification (IPC):
**H04B 7/06** (2006.01)   **H04B 7/08** (2006.01)
**H04W 74/00** (2009.01)   **H04W 72/23** (2023.01)
**H04W 72/1273** (2023.01)   **H04W 74/0833** (2024.01)
**H04W 88/08** (2009.01)

(52) Cooperative Patent Classification (CPC):
**H04B 7/06; H04B 7/08; H04W 72/1273;**
**H04W 72/23; H04W 74/00; H04W 74/0833;**
**H04W 88/08**

(86) International application number:
**PCT/KR2024/016837**

(87) International publication number:
**WO 2025/095591 (08.05.2025 Gazette 2025/19)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority:   05.11.2023   KR 20230151293
                 06.12.2023   KR 20230175998

(71) Applicant: **Samsung Electronics Co., Ltd.**
**Suwon-si, Gyeonggi-do 16677 (KR)**

(72) Inventors:
• WANG, Jinsoo
  Suwon-si, Gyeonggi-do 16677 (KR)
• KWON, Hojoong
  Suwon-si, Gyeonggi-do 16677 (KR)
• KIM, Taeyoung
  Suwon-si, Gyeonggi-do 16677 (KR)
• KIM, Hyejin
  Suwon-si, Gyeonggi-do 16677 (KR)
• NOH, Jeehwan
  Suwon-si, Gyeonggi-do 16677 (KR)
• BAIK, Kyungjin
  Suwon-si, Gyeonggi-do 16677 (KR)
• LIM, Chaehee
  Suwon-si, Gyeonggi-do 16677 (KR)

(74) Representative: **HGF**
**HGF Limited**
**4th Floor, 1 City Square**
**Leeds LS1 2ES (GB)**

(54) **ELECTRONIC DEVICE AND METHOD FOR IDENTIFYING BEAMFORMING PARAMETER SET**

(57)     According to an embodiment, an electronic device executed by a distributed unit (DU) may comprise: at least one transceiver including a fronthaul transceiver; a memory that stores instructions; and a processor. The instructions, when executed by the processor, may cause the electronic device to transmit, to a radio unit (RU), information including a plurality of synchronization signal/physical broadcast channel (SS/PBCH) blocks. The instructions, when executed by the processor, may cause the electronic device to receive, within a first association period from among a plurality of association periods, a physical random access channel (PRACH) signal regarding an SS/PBCH block selected by a terminal from among the plurality of SS/PBCH blocks, on the basis of a first beamforming parameter set from among a plurality of beamforming parameter sets. The instructions, when executed by the processor, may cause the electronic device to receive, within a second association period, the PRACH signal regarding the selected SS/PBCH block on the basis of a second beamforming parameter set.

**(Cont. next page)**

FIG. 9

**Description**

**[Technical Field]**

The present disclosure relates to an electronic device and a method for identifying a beamforming parameter set.

**[Background Art]**

As a transmission capacity in a wireless communication system increases, a function split that functionally splits a base station is being applied. According to the function split, the base station may be split into a distributed unit (DU) and a radio unit (RU). A fronthaul interface is defined for communication between the DU and the RU.

The above-described information may be provided as a related art for the purpose of helping understanding of the present disclosure. No argument or decision is made as to whether any of the above description may be applied as a prior art related to the present disclosure.

**[Disclosure]**

**[Technical Solution]**

According to an embodiment, an electronic device performed by a distributed unit (DU) may comprise at least one transceiver comprising a fronthaul transceiver, memory storing instructions, and a processor. The instructions, when executed by the processor, may cause the electronic device to transmit information comprising a plurality of synchronization signal/physical broadcast channel (SS/PBCH) blocks to a radio unit (RU). The instructions, when executed by the processor, may cause the electronic device to receive, based on a first beamforming parameter set among a plurality of beamforming parameter sets, a physical random access channel (PRACH) signal related to an SS/PBCH block selected by a terminal among the plurality of SS/PBCH blocks in a first association period among a plurality of association periods set for the plurality of SS/PBCH blocks through the RU. The instructions, when executed by the processor, may cause the electronic device to receive, based on a second beamforming parameter set, distinct from the first beamforming parameter, among the plurality of beamforming parameter sets, the PRACH signal related to the selected SS/PBCH block in a second association period, distinct from the first association period, among the plurality of association periods through the RU.

According to an embodiment, an electronic device performed by a radio unit (RU), may comprise at least one transceiver comprising a fronthaul transceiver, memory storing instructions, and a processor. The instructions, when executed by the processor, may cause the electronic device to transmit, based on information comprising a plurality of synchronization signal/physical broadcast channel (SS/PBCH) blocks which is received from a distributed unit (DU), the plurality of SS/PBCH blocks to a terminal. The instructions, when executed by the processor, may cause the electronic device to receive, based on a first beamforming parameter set among a plurality of beamforming parameter sets, a physical random access channel (PRACH) signal related to an SS/PBCH block selected by the terminal among the plurality of SS/PBCH blocks in a first association period among a plurality of association periods set for the plurality of SS/PBCH blocks. The instructions, when executed by the processor, may cause the electronic device to receive, based on a second beamforming parameter set, distinct from the first beamforming parameter, among the plurality of beamforming parameter sets, the PRACH signal related to the selected SS/PBCH block in a second association period, distinct from the first association parameter, among the plurality of association periods.

According to an embodiment, a method performed by a distributed unit (DU) may comprise transmitting information comprising a plurality of synchronization signal/physical broadcast channel (SS/PBCH) blocks to a radio unit (RU). The method may comprise receiving, based on a first beamforming parameter set among a plurality of beamforming parameter sets, a physical random access channel (PRACH) signal related to an SS/PBCH block selected by a terminal among the plurality of SS/PBCH blocks in a first association period among a plurality of association periods set for the plurality of SS/PBCH blocks through the RU. The method may comprise receiving, based on a second beamforming parameter set, distinct from the first beamforming parameter, among the plurality of beamforming parameter sets, the PRACH signal related to the selected SS/PBCH block in a second association period, distinct from the first association parameter, among the plurality of association periods through the RU.

According to an embodiment, a method performed by a radio unit (RU) may comprise transmitting, based on information comprising a plurality of synchronization signal/physical broadcast channel (SS/PBCH) blocks which is received from a distributed unit (DU), the plurality of SS/PBCH blocks to a terminal. The method may comprise receiving, based on a first beamforming parameter set among a plurality of beamforming parameter sets, a physical random access channel (PRACH) signal related to an SS/PBCH block selected by the terminal among the plurality of SS/PBCH blocks in a first association period among a plurality of association periods set for the plurality of SS/PBCH blocks. The method may comprise receiving, based on a second beamforming parameter set, distinct from the first beamforming parameter, among the plurality of beamforming parameter sets, the PRACH signal related to the selected SS/PBCH block in a second association period, distinct from the first association parameter, among the plurality of association periods.

[Description of the Drawings]

FIG. 1 illustrates a wireless communication system.
FIG. 2A illustrates a fronthaul interface.
FIG. 2B illustrates a fronthaul interface of an open (O)-radio access network (RAN).
FIG. 3A illustrates a functional configuration of a distributed unit (DU).
FIG. 3B illustrates a functional configuration of a radio unit (RU).
FIG. 4 illustrates an example of a function split between a DU and an RU.
FIG. 5A illustrates an example in which a base station transmits a single synchronization signal block (SSB).
FIG. 5B illustrates an example in which a base station transmits a plurality of SSBs.
FIG. 6 illustrates an example of an SSB transmitted by a base station.
FIG. 7 illustrates an example of a physical random access channel (RACH) occasion.
FIG. 8 illustrates an example of an operation of performing PRACH detection according to a reception path.
FIG. 9 illustrates an example of a plurality of logical beams (LBs) configured to receive a PRACH.
FIG. 10 illustrates an example of a plurality of association periods configured to receive a PRACH signal.
FIG. 11A illustrates an example of an operation of a base station for performing PRACH detection for each reception path.
FIG. 11B illustrates an example of an operation of a base station for performing PRACH detection for each reception path.
FIG. 12 illustrates an example of an operation of a base station and a terminal.
FIG. 13 illustrates a flowchart related to an operation of a DU.
FIG. 14 illustrates a flowchart related to an operation of an RU.

[Mode for Invention]

Terms used in the present disclosure are used only to describe a specific embodiment, and may not be intended to limit a range of another embodiment. A singular expression may include a plural expression unless the context clearly means otherwise. Terms used herein, including a technical or a scientific term, may have the same meaning as those generally understood by a person with ordinary skill in the art described in the present disclosure. Among the terms used in the present disclosure, terms defined in a general dictionary may be interpreted as identical or similar meaning to the contextual meaning of the relevant technology and are not interpreted as ideal or excessively formal meaning unless explicitly defined in the present disclosure. In some cases, even terms defined in the present disclosure may not be interpreted to exclude embodiments of the present disclosure.

In various embodiments of the present disclosure described below, a hardware approach will be described as an example. However, since the various embodiments of the present disclosure include technology that uses both hardware and software, the various embodiments of the present disclosure do not exclude a software-based approach.

A term referring to a signal (e.g., signal, information, message, signaling), a term referring to a resource (e.g., symbol, slot, subframe, radio frame, subcarrier, resource element (RE), resource block (RB), bandwidth part (BWP), occasion) a term for a calculation state (e.g., step, operation, procedure), a term referring to data (e.g., packet, user stream, information, bit, symbol, codeword), a term referring to a channel, a term referring to a network entity, a term referring to a component of a device, and the like, that are used in the following description, are exemplified for convenience of description. Therefore, the present disclosure is not limited to terms to be described below, and another term having an equivalent technical meaning may be used.

In addition, in the present disclosure, the term 'greater than' or 'less than' may be used to determine whether a particular condition is satisfied or fulfilled, but this is only a description to express an example and does not exclude description of 'greater than or equal to' or 'less than or equal to'. A condition described as 'greater than or equal to ' may be replaced with 'greater than', a condition described as 'less than or equal to' may be replaced with 'less than', and a condition described as ' greater than or equal to and less than' may be replaced with 'greater than and less than or equal to'. In addition, hereinafter, 'A' to 'B' refers to at least one of elements from A (including A) to B (including B). Hereinafter, 'C' and/or 'D' means including at least one of 'C' or 'D', that is, {'C', 'D', and 'C' and 'D'}.

Although the present disclosure describes various embodiments using terms used in some communication standards (e.g., 3rd Generation Partnership Project (3GPP), extensible radio access network (xRAN), open-radio access network (O-RAN)), these are only examples for explanation. The various embodiments of the present disclosure may be easily modified and applied to other communication systems.

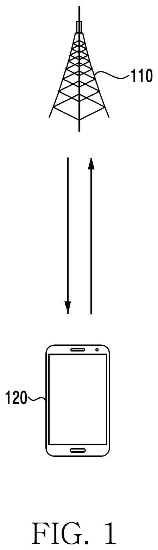

FIG. 1 illustrates a wireless communication system.

Referring to FIG. 1, FIG. 1 illustrates a base station 110 and a terminal 120 as a portion of nodes that utilize a wireless channel in a wireless communication system. FIG. 1 illustrates only one base station, but a wireless communication system may further include another base station that is identical or similar to the base station 110.

The base station 110 is a network infrastructure that provides wireless access to the terminal 120. The base station 110 has coverage defined based on a distance at which a signal may be transmitted. In addition to 'base station', the base station 110 may be referred to as an 'access point (AP)', 'eNodeB (eNB)', '5th generation node', 'next generation nodeB (gNB)', 'wireless point', 'transmission/reception point (TRP)' or other terms having equivalent technical meanings.

The terminal 120, which is a device used by a user, performs communication with the base station 110 through a wireless channel. A link from the base station 110 to the terminal 120 is referred to as a downlink (DL), and a link from the terminal 120 to the base station 110 is referred to as an uplink (UL). In addition, although not illustrated in FIG. 1, the terminal 120 and another terminal may perform communication with each other through a wireless channel. At this time, a link (device-to-device link (D2D)) between the terminal 120 and the other terminal is referred to as a sidelink, and the sidelink may be used interchangeably with a PC5 interface. In some other embodiments, the terminal 120 may be operated without the user's involvement. According to an embodiment, the terminal 120, which is a device performing machine type communication (MTC), may not be carried by the user. Additionally, according to an embodiment, the terminal 120 may be a narrowband (NB)-internet of things (IoT) device.

In addition to 'terminal', the terminal 120 may also be referred to as 'user equipment (UE)', 'customer premises equipment, (CPE)', 'mobile station', 'subscriber station', 'remote terminal', 'wireless terminal', 'electronic device', 'user device', or other terms having equivalent technical meanings.

The base station 110 may perform beamforming with the terminal 120. The base station 110 and the terminal 120 may transmit and receive a wireless signal in a relatively low frequency band (e.g., frequency range 1 (FR 1) of NR). In addition, the base station 110 and the terminal 120 may transmit and receive a wireless signal in a relatively high frequency band (e.g., FR 2 (or FR 2-1, FR 2-2, FR 2-3) or FR 3), and a mmWave band (e.g., 28GHz, 30GHz, 38GHz, 60GHz). The base station 110 and the terminal 120 may perform beamforming to improve a channel gain. Herein, the beamforming may include transmission beamforming and reception beamforming. The base station 110 and the terminal 120 may provide directivity to a transmission signal or a reception signal. To this end, the base station 110 and the terminal 120 may select serving beams through a beam search or beam management procedure. After the serving beams are selected, subsequent communication may be performed through a resource in a QCL relationship with the resource transmitting the serving beams.

If large-scale characteristics of a channel carrying a symbol on a first antenna port may be inferred from a channel carrying a symbol on a second antenna port, the first antenna port and the second antenna port may be evaluated to be in the QCL relationship. For example, large-scale characteristics may include at least one of a delay spread, a Doppler spread, a Doppler shift, an average gain, an average delay, and a spatial receiver parameter.

Although FIG. 1 describes that both the base station 110 and the terminal 120 perform beamforming, the embodiments of the present disclosure are not necessarily limited thereto. In some embodiments, the terminal may or may not perform beamforming. In addition, the base station may or may not perform beamforming. That is, either only one of the base station and the terminal may perform beamforming, or neither the base station nor the terminal may perform beamforming.

In the present disclosure, a beam refers to a spatial flow of a signal in a wireless channel, and is formed by one or more antennas (or antenna elements), and this formation process may be referred to as beamforming. Beamforming may include at least one of analog beamforming or digital beamforming (e.g., precoding). A reference signal transmitted based on beamforming may include, for example, a demodulation-reference signal (DM-RS), a channel state information-reference signal (CSI-RS), a synchronization signal/physical broadcast channel (SS/PBCH), and a sounding reference signal (SRS). In addition, an IE such as CSI-RS resource or SRS-resource may be used as a configuration for each reference signal, and this configuration may include information associated with the beam. The information associated with the beam may mean whether a corresponding configuration (e.g., CSI-RS resource) uses the same spatial domain filter as another configuration (e.g., another CSI-RS resource within the same CSI-RS resource set) or a different spatial domain filter, or which reference signal it is quasi-co-located (QCL) with, and if so, what type it is (e.g., QCL type A, B, C, D).

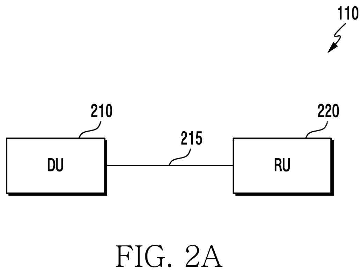

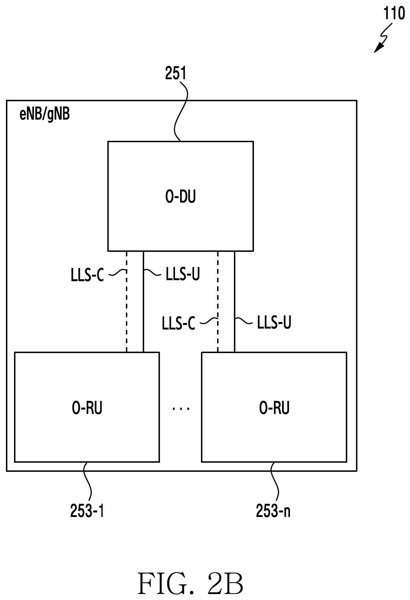

Conventionally, in a communication system with a relatively large cell radius of base station, each base station was installed to include a function of a digital processing unit (or distributed unit (DU)) and a radio frequency (RF) processing unit (or radio unit (RU)). However, as high frequency bands are used in 4th generation (4G) and/or subsequent communication systems (e.g., 5G) and the cell coverage of base stations is reduced, the number of base stations to cover a specific area has increased. The burden of installation cost for operators to install base stations has also increased. In order to minimize the installation cost of a base station, a structure in which the DU and RU of the base station are separated, one or more RUs are connected to one DU through a wired network, and one or more Rus geographically distributed to cover a specific area are deployed, has been proposed. Hereinafter, a deployment structure and expansion examples of a base station according to various embodiments of the present disclosure are described through FIGS. 2A and 2B.

FIG. 2A illustrates a fronthaul interface. Unlike a backhaul between a base station and a core network, the fronthaul refers to a link between entities between a wireless LAN and a base station. FIG. 2A illustrates an example of a fronthaul structure between one DU 210 and one RU 220, but this is only for convenience of explanation and the present disclosure is not limited thereto. In other words, the embodiments of the present disclosure may also be applied to a fronthaul structure between one DU and a plurality of RU. For example, the embodiments of the present disclosure may be applied to a fronthaul structure between one DU and two RU. In addition, the embodiments of the present disclosure may also be applied to a fronthaul structure between one DU and three RU.

Referring to FIG. 2A, the base station 110 may include a DU 210 and an RU 220. A fronthaul 215 between the DU 210 and the RU 220 may be operated via an Fx interface. For operation of the fronthaul 215, an interface such as an enhanced common public radio interface (eCPRI) or radio over ethernet (ROE) may be used.

As communication technology has been developed, mobile data traffic increased, and thus the bandwidth demand required in a fronthaul between a digital unit and a radio unit has increased significantly. In a deployment such as centralized/cloud radio access network (C-RAN), the DU may be implemented to perform functions for packet data convergence protocol (PDCP), radio link control (RLC), media access control (MAC), and physical (PHY), and the RU may be implemented to further perform functions for PHY layer in addition to a radio frequency (RF) function.

The DU 210 may be in charge of upper layer functions of a wireless network. For example, the DU 210 may perform functions of the MAC layer and a part of the PHY layer. Herein, a part of the PHY layer is a function performed at a higher level among the functions of the PHY layer, and may include, for example, channel encoding (or channel decoding), scrambling (or descrambling), modulation (or demodulation), and layer mapping (or layer demapping). According to an embodiment, if the DU 210 complies with an O-RAN standard, it may be referred to as an O-RAN DU (O-DU). The DU 210 may be replaced with and represented as a first network entity for a base station (e.g., gNB) in embodiments of the present disclosure, as needed.

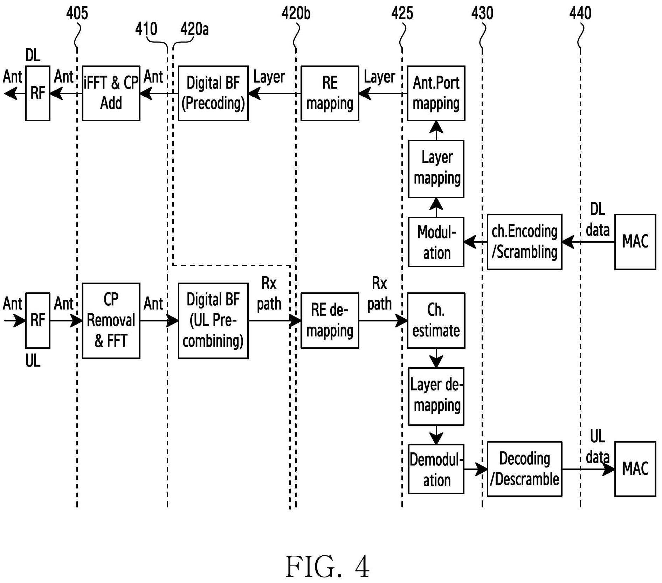

The RU 220 may be in charge of lower layer functions of a wireless network. For example, the RU 220 may perform a part of the PHY layer, and a RF function. Herein, a part of the PHY layer is a function performed at performed at a relatively lower level than the DU 210 among the functions of the PHY layer, and may include, for example, iFFT conversion (or FFT conversion), cyclic prefix (CP) insertion (or CP removal), and digital beamforming. In FIG. 4, an example of such a specific function split is described in detail. The RU 220 may be referred to as access unit (AU), access point (AP), transmission/reception point (TRP), remote radio head (RRH), radio unit (RU), or other terms having equivalent technical meanings. According to an embodiment, if the RU 220 complies with the O-RAN standard, it may be referred to as an O-RAN RU (O-RU). The RU 220 may be replaced with and represented as a second network entity for a base station (e.g., gNB) in embodiments of the present disclosure, as needed.

Although FIG. 2A describes that the base station 110 includes the DU 210 and the RU 220, the embodiments of the present disclosure are not limited thereto. The base station according to the embodiments may be implemented in a distributed deployment according to a centralized unit (CU) configured to perform functions of upper layers (e.g., packet data convergence protocol (PDCP), radio resource control (RRC)) of an access network and a distributed unit (DU) configured to perform functions of lower layers. At this time, the distributed unit (DU) may include the digital unit (DU) and the radio unit (RU) of FIG. 1. Between a core (e.g., 5G core (5GC) or next generation core (NGC)) network and a radio access network (RAN), the base station may be implemented in a structure in which CU, DU, and RU are arranged in order. An interface between the CU and the distributed unit (DU) may be referred to as an F1 interface.

A centralized unit (CU) may be in charge of functions of a higher layer than the DU, by being connected to one or more DUs. For example, the CU may be in charge of radio resource control (RRC) and a function of a packet data convergence protocol (PDCP) layer, and the DU and the RU may be in charge of functions of lower layers. The DU may perform radio link control (RLC), media access control (MAC), and some functions (high PHY) of PHY layer, and the RU may perform remaining functions (low PHY) of the PHY layer. In addition, as an example, a digital unit (DU) may be included in a distributed unit (DU) according to the implementation of distributed deployment of the base station. Hereinafter, unless otherwise defined, it is described as operations of the digital unit (DU) and the RU, but various embodiments of the present disclosure may be applied to both of a base station arrangement including the CU or an arrangement where the DU is directly connected to a core network (i.e., the CU and the DU are integrated into a base station (e.g., NG-RAN node) which is a single entity).

FIG. 2B illustrates a fronthaul interface of an open (O)-radio access network (RAN). As a base station 110 according to distributed deployment, eNB or gNB is exemplified.

Referring to FIG. 2B, the base station 110 may include an O-DU 251 and O-RUs 253-1, ..., and 253-n. Hereinafter, for convenience of explanation, an operation and a function of the O-RU 253-1 may be understood as a description of each of other O-RUs (e.g., O-RU 253-n).

The O-DU 251 is a logical node including functions among functions of a base station (e.g., eNB, gNB) according to FIG. 4 to be described later, except for functions allocated exclusively to the O-RU 253-1. The O-DU 251 may control operations of the O-RUs 253-1, ..., and 253-n. The O-DU 251 may be referred to as a lower layer split (LLS) central unit (CU). The O-RU 253-1 is a logical node including a subset among the functions of a base station (e.g., eNB, gNB) according to FIG. 4 to be described later. The real-time aspect of the control plane (C-plane) communication and user plane (U-plane) communication with the O-RU 253-1 may be controlled by the O-DU 251.

The O-DU 251 may perform communication with the O-RU 253-1 through an LLS interface. The LLS interface corresponds to a fronthaul interface. The LLS interface refers to a logical interface between the O-DU 251 and the O-RU 253-1 using lower layer functional split (i.e., intra-PHY-based functional split). The LLS-C between the O-DU 251 and the O-RU 253-1 provides a C-plane through the LLS interface. The LLS-U between the O-DU 251 and the O-RU 253-1 provides a U-plane through the LLS interface.

In FIG. 2B, entities of the base station 110 have been described as O-DU and O-RU to describe O-RAN. However, these designations are not to be construed as limiting the embodiments of the present disclosure. In embodiments described below, operations of the DU 210 may also be performed by the O-DU 251. A description of the DU 210 may be applied to the O-DU 251. Likewise, in embodiments described below, operations of the RU 220 may also be performed by the O-RU 253-1. A description of the RU 220 may be applied to the O-RU 253-1.

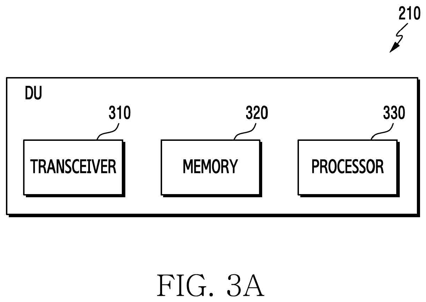

FIG. 3A illustrates a functional configuration of a distributed unit (DU). A configuration exemplified in FIG. 3A, which is as a part of a base station, may be understood as a configuration of the DU 210 of FIG. 2A (or the O-DU 251 of FIG. 2B). Hereinafter, the terms '...unit' and '...er' used below refer to a unit processing at least one function or operation, which may be implemented by hardware or software, or a combination of hardware and software.

Referring to FIG. 3A, a DU 210 includes a transceiver 310, memory 320, and a processor 330.

The transceiver 310 may perform functions for transmitting and receiving a signal in a wired communication environment. The transceiver 310 may include a wired interface for controlling a direct device-to-device connection through a transmission medium (e.g., copper wire, optical fiber). For example, the transceiver 310 may transmit an electrical signal to another device through a copper wire or perform conversion between an electrical signal and an optical signal. The DU 210 may communicate with a radio unit (RU) through the transceiver 310. The DU 210 may be connected to a core network or a CU of a distributed deployment through the transceiver 310.

The transceiver 310 may also perform functions for transmitting and receiving a signal in a wireless communication environment. For example, the transceiver 310 may perform a conversion function between a baseband signal and a bit string according to a physical layer specification of a system. For example, upon transmitting data, the transceiver 310 generates complex-valued symbols by encoding and modulating a transmission bit string. In addition, upon receiving data, the transceiver 310 restores a received bit string by demodulating and decoding a baseband signal. In addition, the transceiver 310 may include a plurality of transmission/reception paths. In addition, according to an embodiment, the transceiver 310 may be connected to a core network or to other nodes (e.g., integrated access backhaul (IAB)).

The transceiver 310 may transmit and receive a signal. For example, the transceiver 310 may transmit a management plane (M-plane) message. For example, the transceiver 310 may transmit a synchronization plane (S-plane) message. For example, the transceiver 310 may transmit a control plane (C-plane) message. For example, the transceiver 310 may transmit a user plane (U-plane) message. For example, the transceiver 310 may receive the U-plane message. Although only the transceiver 310 is illustrated in FIG. 3A, the DU 210 may include two or more transceivers according to another implementation.

The transceiver 310 transmits and receives a signal as described above. Accordingly, all or some of the transceiver 310 may be referred to as a 'communication unit', a 'transmission unit', a 'reception unit', or a 'transmission/reception unit'. In addition, in the following description, transmission and reception performed through a wireless channel are used to the meaning including that the processing as described above is performed by the transceiver 310.

Although not illustrated in FIG. 3A, the transceiver 310 may further include a backhaul transceiver for connection with a core network or another base station. The backhaul transceiver provides an interface for performing communication with other nodes in the network. In other words, the backhaul transceiver converts a bit string transmitted from a base station to another node, such as another access node, another base station, an upper node, and a core network into a physical signal, and converts a physical signal received from another node into a bit string.

The memory 320 stores a basic program, an application program, and data such as configuration information for an operation of the DU 210. The memory 320 may be referred to as a storage unit. The memory 320 may be configured with a volatile memory, a nonvolatile memory, or a combination of the volatile memory and the nonvolatile memory. In addition, the memory 320 provides stored data according to a request from the processor 330.

The processor 330 controls overall operations of the DU 210. The processor 380 may be referred to as a control unit. For example, the processor 330 transmits and receives a signal through the transceiver 310 (or through a backhaul communication unit). In addition, the processor 330 writes and reads data in the memory 320. In addition, the processor 330 may perform functions of a protocol stack required in a communication standard. Although only the processor 330 is illustrated in FIG. 3A, the DU 210 may include two or more processors according to another implementation.

A configuration of the DU 210 illustrated in FIG. 3A is only an example, and an example of the DU performing the embodiments of the present disclosure is not limited to the configuration illustrated in FIG. 3A. In some embodiment, some configurations may be added, deleted, or changed.

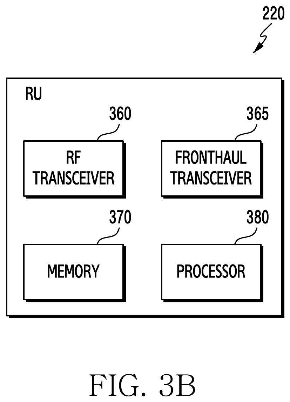

FIG. 3B illustrates a functional configuration of a radio unit (RU). A configuration exemplified in FIG. 3B, which is as a part of a base station, may be understood as a configuration of the RU 220 of FIG. 2B or the O-RU 253-1 of FIG. 2B. Hereinafter, the terms '...unit' and '...er' used below refer to a unit processing at least one function or operation, which may be implemented by hardware or software, or a combination of hardware and software.

Referring to FIG. 3B, the RU 220 includes an RF transceiver 360, a fronthaul transceiver 365, memory 370, and a processor 380.

The RF transceiver 360 performs functions for transmitting and receiving a signal through a wireless channel. For example, the RF transceiver 360 up-converts a baseband signal into an RF band signal and then transmits it through an antenna, and down-converts an RF band signal received through the antenna into a baseband signal. For example, the RF transceiver 360 may include a transmission filter, a reception filter, an amplifier, a mixer, an oscillator, a DAC, an ADC.

The RF transceiver 360 may include a plurality of transmission/reception paths. Furthermore, the RF transceiver 360 may include an antenna unit. The RF transceiver 360 may include at least one antenna array composed of a plurality of antenna elements. In terms of hardware, the RF transceiver 360 may be composed of a digital circuit and an analog circuit (e.g., a radio frequency integrated circuit (RFIC)). Herein, the digital circuit and the analog circuit may be implemented as a single package. In addition, the RF transceiver 360 may include a plurality of RF chains. The RF transceiver 360 may perform beamforming. In order to provide directivity to a signal to be transmitted and received according to the setting of the processor 380, the RF transceiver 360 may apply beamforming weights to the signal. According to an embodiment, the RF transceiver 360 may include a radio frequency (RF) block (or RF unit).

According to an embodiment, the RF transceiver 360 may transmit and receive a signal on a radio access network. For example, the RF transceiver 360 may transmit a downlink signal. The downlink signal may include a synchronization signal (SS), a reference signal (RS) (e.g., cell-specific reference signal (CRS), demodulation (DM)-RS), system information (e.g., MIB, SIB, remaining system information (RMSI), other system information (OSI)), configuration message, control information or downlink data. In addition, for example, the RF transceiver 360 may receive an uplink signal. The uplink signal may include a random access-related signal (e.g., random access preamble (RAP)) (or message 1 (Msg1), message 3 (Msg3)), a reference signal (e.g., sounding reference signal (SRS), DM-RS), or a power headroom report (PHR). Although only the RF transceiver 360 is illustrated in FIG. 3B, the RU 220 may include two or more RF transceivers according to another implementation.

According to embodiments, the RF transceiver 460 may transmit an RIM-RS. The RF transceiver 460 may transmit a first type of RIM-RS (e.g., RIM-RS type 1 of 3GPP) to inform the detection of remote interference. The RF transceiver 460 may transmit a second type of RIM-RS (e.g., RIM-RS type 2 of 3GPP) to inform the presence or absence of remote interference.

The fronthaul transceiver 365 may transmit and receive a signal. According to an embodiment, the fronthaul transceiver 365 may transmit and receive a signal on a fronthaul interface. For example, the fronthaul transceiver 365 may receive a management plane (M-plane) message. For example, the fronthaul transceiver 365 may receive a synchronization plane (S-plane) message. For example, the fronthaul transceiver 365 may receive a control plane (C-plane) message. For example, the fronthaul transceiver 365 may transmit a user plane (U-plane) message. For example, the fronthaul transceiver 365 may receive a U-plane message. Although only the fronthaul transceiver 365 is illustrated in FIG. 3B, the RU 220 may include two or more fronthaul transceivers according to another implementation.

As described above, the RF transceiver 360 and the fronthaul transceiver 365 transmit and receive a signal. Accordingly, all or some of the RF transceiver 360 and the fronthaul transceiver 365 may be referred to as a 'communication unit', a 'transmission unit', a 'reception unit', or a 'transmission/reception unit'. In addition, in the following description, transmission and reception performed through a wireless channel are used to the meaning including that the processing as described above is performed by the RF transceiver 360. In the following description, transmission and reception performed through a wireless channel are used to the meaning including that the processing as described above is performed by the RF transceiver 360.

The memory 370 stores a basic program, an application program, and data such as configuration information for an operation of the RU 220. The memory 370 may be referred to as a storage unit. The memory 370 may be configured with a volatile memory, a nonvolatile memory, or a combination of the volatile memory and the nonvolatile memory. In addition, the memory 370 provides stored data according to a request from the processor 380. According to an embodiment, the memory 370 may include a memory for a condition, a command, or a setting value related to an SRS transmission scheme.

The processor 380 controls overall operations of the RU 220. The processor 380 may be referred to as a control unit. For example, the processor 380 transmits and receives a signal through the RF transceiver 360 or the fronthaul transceiver 365. In addition, the processor 380 writes and reads data in the memory 370. In addition, the processor 380 may perform functions of a protocol stack required by a communication standard. Although only the processor 380 is illustrated in FIG. 3B, the RU 220 may include two or more processors according to another implementation. The processor 380, which is an instruction set or code stored in the memory 370, may be an instruction/code at least temporarily resided in the processor 380 or a storage space storing instruction/code, or part of circuitry constituting the processor 380. In addition, the processor 380 may include various modules for performing communication. The processor 380 may control the RU 220 to perform operations according to embodiments to be described later.

A configuration of the RU 220 illustrated in FIG. 3B is only an example, and an example of the RU performing the embodiments of the present disclosure is not limited to the configuration illustrated in FIG. 3B. In some embodiment, some configurations may be added, deleted, or changed.

FIG. 4 illustrates an example of a function split between a DU and an RU according to embodiments. As wireless communication technology advances (e.g., the introduction of 5th generation (5G) communication system (or new radio (NR) communication system)), the used frequency bands have increased further. As a cell radius of base stations became very small, the number of RUs required to be installed further increased. In addition, in the 5G communication system, as the amount of data transmitted has increased significantly by more than 10 times, a transmission capacity of a wired network transmitted to a fronthaul has increased significantly. Due to the above-described factors, the installation cost of a wired network in the 5G communication system may be increased significantly. Therefore, in order to reduce the transmission capacity of the wired network and reduce the installation cost of the wired network, a 'function split' to reduce a transmission capacity of the fronthaul by transferring some functions of the DU's modem to the RU may be used.

In order to reduce the burden on the DU, a role of the RU, which was in charge of only the existing RF function, may be extended to include some functions of a physical layer. As the RU performs functions of the higher layer, the throughput of the RU increases, which may increase a transmission bandwidth in the fronthaul while lowering the delay time requirement constraints due to response processing. On the other hand, as the RU performs the functions of the higher layer, a virtualization gain decreases and the size, weight, and cost of the RU increase. In consideration of the trade-off of the above-described advantages and disadvantages, it is required to implement an optimal function split.

Referring to FIG. 4, function splits in a physical layer below a MAC layer are illustrated. In a case of downlink (DL) transmitting signals to a terminal through a wireless network, a base station may sequentially perform channel encoding/scrambling, modulation, layer mapping, antenna mapping, RE mapping, digital beamforming (e.g., precoding), iFFT conversion/CP insertion, and RF conversion. In a case of uplink (UL) receiving signals from a terminal through the wireless network, the base station may sequentially perform RF conversion, FFT conversion/CP removal, digital beamforming (pre-combining), RE demapping, channel estimation, layer demapping, demodulation, decoding/discrambling. According to the above-described trade-off, the split of uplink functions and downlink functions may be defined in various types, by needs among vendors, discussion of standards, and the like.

In a first function split 405, the RU performs the RF function, and the DU performs the PHY function. The first function split is substantially such that the PHY function is not implemented within the RU, and as an example, it may be referred to as Option 8. In a second function split 410, the RU performs iFFT conversion/CP insertion in the DL of the PHY function and FFT conversion/CP removal in the UL, and the DU performs the remaining PHY functions. As an example, the second function split 410 may be referred to as Option 7-1. In a third function split 420a, the RU performs iFFT conversion/CP insertion in the DL of the PHY function and FFT conversion/CP removal and digital beamforming in the UL, and the DU performs the remaining PHY functions. As an example, the third function split 420a may be referred to as Option 7-2x Category A. In a fourth function split 420b, the RU performs digital beamforming in both DL and UL, and the DU performs upper PHY functions after digital beamforming. As an example, the fourth function split 420b may be referred to as Option 7-2x Category B. In a fifth function split 425, the RU performs RE mapping (or RE demapping) in both DL and UL, and the DU performs upper PHY functions after RE mapping (or RE demapping). As an example, the fifth function split 425 may be referred to as Option 7-2. In a sixth function split 430, the RU performs up to modulation (or demodulation) in both DL and UL, and the DU performs upper PHY functions after modulation (or demodulation). As an example, the sixth function split 430 may be referred to as Option 7-3. In a seventh function split 440, the RU performs up to encoding/-scrambling (or decoding/discrambling) in both DL and UL, and the DU performs upper PHY functions after modulation (or demodulation). As an example, the seventh function split 440 may be referred to as option 6.

According to an embodiment, in a case that a large amount of signal processing is expected, such as in FR 1 MMU, a function split (e.g., the fourth function split 420b) in a relatively high layer may be required to reduce a fronthaul capacity. Additionally, in a function split (e.g., the sixth function split 430) at a too high layer, as a control interface becomes complex and multiple PHY processing blocks are included in the RU, which may cause a burden on the implementation of the RU, a suitable function split may be required according to the arrangement and implementation method of the DU and RU.

According to an embodiment, in a case that precoding of data received from the DU cannot be processed (i.e., in a case that there is a limit to the precoding capability of the RU), the third function split 420a or a lower function split (e.g., the second function split 410) may be applied. Conversely, in a case that there is a capability to process precoding of data received from the DU, the fourth function split 420b or a higher function split (e.g., the sixth function split 430) may be applied.

Hereinafter, unless otherwise specified, the embodiments in the present disclosure are described based on the third function split 420a (it may be referred to as category A (CAT-A)), or the fourth function split 420b (it may be referred to as category B (CAT-B)) for performing beamforming processing in the RU. In the O-RAN standard, the type of O-RU is distinguished according to whether the precoding function is located at an interface of the O-DU or an interface of the O-RU. An O-RU in which precoding is not performed (i.e., low complexity) may be referred to as a CAT-A O-RU. An O-RU in which precoding is performed may be referred to as a CAT-B O-RU.

Hereinafter, an upper PHY means a physical layer processing processed in a DU of a fronthaul interface. For example, the upper-PHY may include FEC encoding/decoding, scrambling, modulation/demodulation. Hereinafter, a lower-PHY means a physical layer processing processed in an RU of the fronthaul interface. For example, the lower-PHY may include FFT/iFFT, digital beamforming, physical random access channel (PRACH) extraction, and filtering. However, the above-described criteria do not exclude embodiments through other function splits. Functional configurations, signaling, or operations of embodiments, may be applied not only to the third function split 420a or the fourth function split 420b, but also to other function splits.

The embodiments of the present disclosure exemplarily describe standards of eCPRI and O-RAN as a fronthaul interface when transmitting a message between a DU (e.g., the DU 210) of FIG. 2A) and an RU (e.g., the RU 220 of FIG. 2A). The Ethernet payload of the message may include an eCPRI header, an O-RAN header, and an additional field. Hereinafter, various embodiments of the present disclosure are described using standard terms of eCPRI or O-RAN, but other expressions having equivalent meanings to each term may be used as substitutes in various embodiments of the present disclosure. Hereinafter, various embodiments of the present disclosure are described using the standard term of eCPRI or O-RAN, but are not limited thereto. For example, in various embodiments of the present disclosure, a CPRI standard may be used as a fronthaul interface.

Ethernet and eCPRI, which are easy to share with networks, may be used as a transport protocol of fronthaul. The eCPRI header and the O-RAN header may be included in the Ethernet payload. The eCPRI header may be located at the front of the Ethernet payload. The eCPRI header has the following contents.

1) ecpriVersion (4 bits): This parameter indicates an eCPRI protocol version.
2) ecpriReserved (3 bits): This parameter is reserved for further use of eCPRI.
3) ecpriConcatenation (1 bit): This parameter indicates when eCPRI concatenation is in use.
4) ecpriMessage (1 byte): This parameter indicates a type of a service carried by a message type. For example, the parameter indicates an IQ data message, a real-time control data message, or a transport network delay measurement message.
5) ecpriPayload (2 bytes): This parameter indicates a byte size of a payload portion of the eCPRI message.
6) ecpriRtcid/ecpriPcid (2 bytes): This parameter is an extended Antenna-carrier (eAxC) identifier (eAxC ID) and identifies a specific data flow related to each of C-plane (ecpriRtcid) or U-plane (ecpriPcid) message.
7) ecpriSeqid (2 bytes): This parameter provides unique message identification and order at two levels. The first octet of this parameter is a sequence ID used to identify the order of messages within an eAxC message stream, and the sequence ID is used to ensure that all messages are received and to reorder out-of-order messages. The second octet of this parameter is a subsequence ID. The subsequence ID is used to verify ordering and implement reordering when radio-transport-level (eCPRI or IEEE-1914.3) fragmentation occurs.

The eAxC identifier (ID) includes a band and sector identifier ('BandSector_ID'), a component carrier identifier ('CC_ID'), a spatial stream identifier ('RU_Port_ID'), and a distributed unit identifier ('DU_Port_ID'). The bit allocation of the eAxC ID may be distinguished as follows.

1) DU_port ID: The DU_port ID is used to distinguish processing units in the O-DU (e.g. different baseband cards). It is expected that the O-DU will allocate bits for the DU_port ID and the O-RU will attach the same value to the UL U-plane message carrying the same sectionId data.
2) BandSector_ID: Aggregated cell identifier (identification of band and sector supported by O-RU).
3) CC_ID: CC_ID identifies carrier components supported by the O-RU.
4) RU_port ID: The RU_port ID designates logical flows such as data layer or spatial streams, and logical flows such as separate numerologies (e.g., PRACH) or signal channels like SRS requiring specific antenna assignments.

An application protocol of the fronthaul may include a control plane (C-plane), a user plane (U-plane), a synchronization plane (S-plane), and a management plane (M-plane).

The control plane may be configured to provide scheduling information and beamforming information via a control message. The control plane means real-time control between the DU and the RU. The user plane may include IQ sample data transmitted between the DU and the RU. The user plane may include downlink data (IQ data or SSB/RS), uplink data (IQ data or SRS/RS), or PRACH data of the user. A weight vector of the beamforming information described above may be multiplied by the user's data. The synchronization plane generally means traffic between the DU and the RU for a synchronization controller (e.g., IEEE grand master). The synchronization plane may be related to timing and synchronization. The management plane means non-real-time control between the DU and the RU. The management plane may be related to initial setup, non-realtime reset or reset, and non-realtime report.

A message in the control plane, that is, the C-plane message, may be encapsulated based on a two-layer header approach. A first layer may be configured with eCPRI common header or the IEEE 1914.3 common header, which includes fields used to indicate a message type. A second layer is an application layer, which includes fields necessary for control and synchronization. In the application layer, a section defines a characteristic of U-plane data transmitted or received on a beam with one pattern ID. The section types supported within the C-plane are as follows.

Section Type may indicate the purpose of the control message transmitted in the control plane. For example, the purposes of Section Type are as follows.

1) sectionType=0: Used to indicate resource blocks or symbols not used in the DL or the UL.
2) sectionType=1: Used for most DL/UL wireless channels. Herein, "most" refers to channels that do not require time or frequency offsets such as those required for mixed numerology channels.
3) sectionType=2: reserved for further use
4) sectionType=3: PRACH and mixed-numerology channels. Channels that require time or frequency offsets or differ from the nominal SCS value(s).
5) sectionType=4: reserved for further use
6) sectionType=5: UE scheduling information. Transmits UE scheduling information so that the RU can perform real-time BF weight calculation (O-RAN optional BF method)
7) sectionType=6: Transmit UE-specific channel information. Periodically transmits UE channel information so that the RU can perform real-time BF weight calculation (O-RAN optional BF method)
8) sectionType=7: Used for LAA support

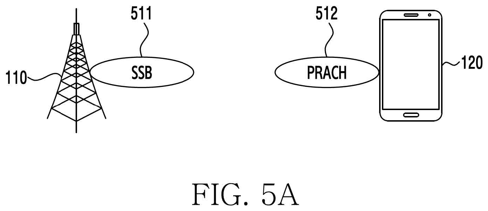

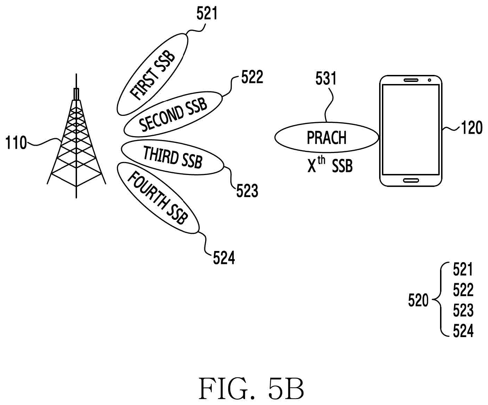

According to an embodiment, a base station 110 (e.g., a DU) may transmit a synchronization signal/physical broadcast channel (SS/PBCH) (hereinafter, a synchronization signal block (SSB)) to a terminal 120. The base station 110 may transmit the SSB so that the terminal 120 may access the base station 110 (or a cell). The base station 110 may transmit a single SSB, or may transmit a plurality of SSBs to the terminal 120. FIG. 5A will illustrate an example in which the base station 110 transmits one SSB (or a single SSB) to the terminal 120. FIG. 5B will illustrate an example in which the base station 110 transmits a plurality of SSBs to the terminal 120.

FIG. 5A illustrates an example in which a base station transmits a single synchronization signal block (SSB).

FIG. 5B illustrates an example in which a base station transmits a plurality of SSBs.

A base station 110 (or DU) may periodically transmit an SSB (or SS/PBCH) 511. The base station 110 may transmit the SSB 511 based on a designated time interval. For example, the base station 110 may transmit the SSB 511 such that a terminal 120 may access a cell related to the base station 110 within a system.

For example, a period in which the SSB 511 is transmitted may be set in various ways. As an example, the period in which the SSB 511 is transmitted may be set as one of 5 milliseconds (ms), 10ms, 20ms, 40ms, 80ms, and 160ms.

Referring to FIG. 5A, the base station 110 may transmit one SSB 511 to the terminal 120. The terminal 120 may receive the SSB 511 transmitted from the base station 110. The terminal 120 may obtain downlink frequency synchronization and/or time synchronization through the received SSB 511.

For example, a base station 110 may generate (or configure) the SSB 511 by using a beam. The base station 110 may generate (or configure) the SSB 511 by using one beamforming parameter set. The base station 110 may transmit the SSB 511 generated by using the one beamforming parameter set to the terminal 120. The terminal 120 may obtain downlink frequency synchronization and/or time synchronization based on reference signal received power (RSRP) related to the SSB 511. As an example, the terminal 120 may obtain the downlink frequency synchronization and/or the time synchronization based on identifying that the RSRP related to the SSB 511 is equal to or greater than a threshold value.

The terminal 120 may obtain a master information block (MIB) based on the received SSB 511. The MIB may include essential information related to a cell. As an example, the MIB may include information related to a numerology of a system information block 1 (SIB1), and information related to a configuration of the SIB1. Although not illustrated, the terminal 120 may receive the SIB1 based on the SSB 511 after receiving the SSB 511. The SIB1 may include information (or a parameter) for an initial random access. The terminal 120 may transmit a PRACH signal 512 to the base station 110 to perform the initial random access based on the SIB1. According to an embodiment, the information (or the parameter) for the random access may be included in an SIB2. For example, in an NR standard, the information (or the parameter) for the random access may be included in the SIB1. For example, in an LTE standard, the information (or the parameter) for the random access may be included in the SIB2.

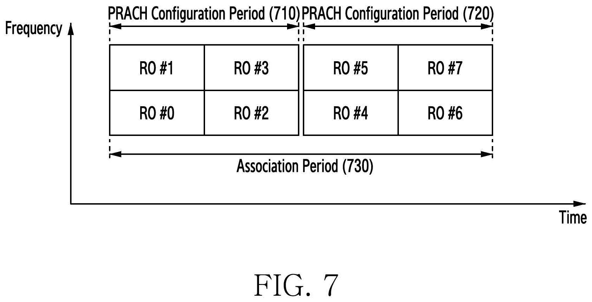

The terminal 120 may transmit the PRACH signal 512 to the base station 110 in a random access channel (RACH) occasion related to the SSB 511. A specific example of the RACH occasion will be described later with reference to FIG. 7.

Referring to FIG. 5B, the base station 110 may transmit a plurality of SSBs 520 to the terminal 120. The base station 110 may sequentially transmit the plurality of SSBs 520 to the terminal 120. The plurality of SSBs 520 may configure one synchronization signal (SS) burst set. For example, the base station 110 may configure the plurality of SSBs 520 respectively corresponding to a plurality of beams. The base station 110 may configure the plurality of SSBs 520 corresponding to a plurality of beamforming parameter sets. For example, the plurality of SSBs 520 included in the SS burst set may be transmitted continuously or discontinuously.

For example, the base station 110 may generate (or configure) the plurality of SSBs 520 by using the plurality of beams. The base station 110 may generate (or configure) the plurality of SSBs 520 by using the plurality of beamforming parameter sets. Each of the plurality of beamforming parameter sets may correspond to the plurality of SSBs 520. As an example, the plurality of SSBs 520 may include a first SSB 521, a second SSB 522, a third SSB 523, and a fourth SSB 524. The first SSB 521 may be generated (or configured) based on a first beamforming parameter set. The second SSB 522 may be generated (or configured) based on a second beamforming parameter set. The third SSB 523 may be generated (or configured) based on a third beamforming parameter set. The fourth SSB 524 may be generated (or configured) based on a fourth beamforming parameter set.

In FIG. 5B, an example in which the number of SSBs included in the plurality of SSBs 520 is 4 is illustrated, but it is not limited thereto. The number of SSBs included in the plurality of SSBs 520 may be configured in various ways. For example, in a 3 GHz frequency band, the maximum number of SSBs included in the plurality of SSBs 520 may be set as 4. The base station 110 may perform beam sweeping for 4 beams in the 3 GHz frequency band. For example, in a frequency band between 3 GHz and 6 GHz, the maximum number of SSBs included in the plurality of SSBs 520 may be set as 8. The base station 110 may perform beam sweeping for 8 beams in the frequency band between 3 GHz and 6 GHz. For example, in a frequency range (FR) 2, the maximum number of SSBs included in the plurality of SSBs 520 may be set as 64. The base station 110 may perform beam sweeping for 64 beams in the frequency range (FR) 2.

Referring to FIG. 5B, the terminal 120 may perform a measurement for the plurality of SSBs 520. For example, the terminal 120 may obtain reference signal received power (RSRP) for each of the plurality of SSBs 520 (e.g., the first SSB 521 to the fourth SSB 524). The terminal 120 may select (or determine, identify) an SSB having the highest RSRP among the plurality of SSBs 520. The terminal 120 may transmit a PRACH signal 531 in a RACH occasion corresponding to the selected SSB. The base station 110 may identify the selected SSB (or an SSB resource indicator (SSBRI)) based on receiving the PRACH signal 531 in a RACH occasion corresponding to the selected SSB (i.e., an xth SSB). For example, the terminal 120 may obtain an MIB based on the selected SSB as illustrated in FIG. 5A. The terminal 120 may receive an SIB1 based on the MIB. The terminal 120 may transmit the PRACH signal 531 in the RACH occasion corresponding to the selected SSB based on the SIB1.

Referring to FIG. 5A and FIG. 5B, in a case that the plurality of SSBs 520 are transmitted, different beams may be allocated to each SSB. In a case that the plurality of SSBs 520 are transmitted, different beamforming parameter sets may be applied to each SSB. A latency in a case that the plurality of SSBs 520 are transmitted may be longer than a latency in a case that one SSB 511 is transmitted, but in a case that the plurality of SSBs 520 are transmitted, the plurality of SSBs 520 may be transmitted through sharp beams, thereby coverage may be extended.

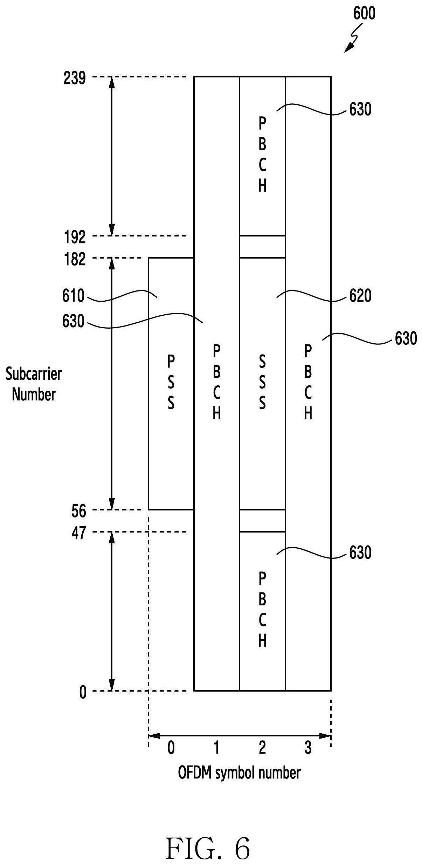

FIG. 6 illustrates an example of an SSB transmitted by a base station.

Referring to FIG. 6, an SSB 600 may include a primary synchronization signal (PSS) 610, an secondary synchronization signal (SSS) 620, and a physical broadcast channel (PBCH) 630. Although not illustrated, the SSB 600 may further include a demodulation reference signal (DMRS) for the PBCH 630. Symbols of the PBCH 630 may include a frequency-multiplexed DMRS. For example, the SSB 600 may be referred to as an SS/PBCH.

The SSB 600 may be configured with 4 consecutive OFDM symbols. The SSB 600 may occupy 240 subcarriers. The PSS 610 may be transmitted through a first symbol. The PSS 610 may occupy 127 subcarriers. For example, the PSS 610 may be configured with one of 3 sequences.

The SSS 620 may be transmitted through a third symbol. The SSS 620 may occupy 127 subcarriers in the same manner as the PSS 610. In the third symbol, a signal may not be mapped to 8 subcarriers and 9 subcarriers on both sides of the SSS 620.

The PBCH 630 may be transmitted through a second symbol and a fourth symbol among 4 symbols configuring the SSB 600. In addition, the PBCH 630 may be transmitted through 48 subcarriers on both sides of the SSS 620 of the third symbol. As an example, quadrature phase shift keying (QPSK) modulation may be used for the PBCH 630. As an example, polar coding may be used for the PBCH 630.

For example, a possible time location of the SSB 600 within a half-frame may be determined by a subcarrier spacing and a period of the half-frame. An SSB configured by a network may be transmitted within the half-frame. During the half-frame, different SSBs may be transmitted in different spatial directions.

For example, within a frequency range of a subcarrier, a plurality of SSBs may be transmitted. A physical layer cell identifier (PCI) of an SSB transmitted at different frequency locations may not be unique. Different SSBs within a frequency domain may have different PCIs.

For example, when the SSB 600 is associated with remaining minimum system information (RMSI), the SSB 600 may be referred to as a cell-defining SSB (CD-SSB). A primary cell (PCell) may always be connected to the CD-SSB on a synchronization raster.

FIG. 7 illustrates an example of a physical random access channel (RACH) occasion.

Referring to FIG. 7, 6 physical random access channel (RACH) occasions (hereinafter, ROs) may be included within a PRACH configuration period 710. One RO may correspond to one or more SSBs.

According to an embodiment, one RO may correspond to one SSB. For example, in a case that a first SSB, a second SSB, a third SSB, and a fourth SSB are transmitted from a base station 110, the first SSB may correspond to an RO #0. The second SSB may correspond to an RO #1. The third SSB may correspond to an RO #2. The fourth SSB may correspond to an RO #3.

According to an embodiment, one RO may correspond to a plurality of SSBs. For example, in a case that a first SSB to an eighth SSB are transmitted from the base station 110, the first SSB and the second SSB may correspond to the RO #0. The third SSB and the fourth SSB may correspond to the RO #1. The fifth SSB and the sixth SSB may correspond to the RO #2. The seventh SSB and the eighth SSB may correspond to the RO #3. As an example, in a case that 'ssb-perRACH-OccasionAndCB-PreamblesPerSSB' is set as '2', 2 SSBs may be mapped to one RO. As an example, in a case that 'ssb-perRACH-OccasionAndCB-PreamblesPerSSB' is set as '1/2(one-half)', 1 SSB may be mapped to 2 ROs.

For example, the terminal 120 may transmit a PRACH signal to the base station 110 by using at least one of a plurality of ROs. The terminal 120 may select (or determine, identify) an SSB having the highest RSRP among a plurality of received SSBs. The terminal 120 may transmit the PRACH signal to the base station 110 through an RO corresponding to the selected SSB. The base station 110 may identify the selected SSB (or an SSB resource indicator (SSBRI)) based on the RO corresponding to the selected SSB. As an example, in a case that two or more SSBs are mapped to the RO in which the PRACH signal is transmitted, the base station 110 may identify a preamble index (or a sequence). The base station 110 may identify one SSB among two or more SSBs mapped to the RO in which the PRACH signal is transmitted based on the preamble index.

According to an embodiment, 1 RO may correspond to 1 SSB. The base station 110 may transmit 8 SSBs. Since 4 ROs are included within the PRACH configuration period 710, the PRACH configuration period may not be sufficient to indicate 8 SSBs. Therefore, a PRACH configuration period 720 may be used to indicate remaining SSBs. By using the PRACH configuration period 710 and the PRACH configuration period 720, 8 SSBs may be indicated. Each of 8 ROs included in the PRACH configuration period 710 and the PRACH configuration period 720 may correspond to 8 SSBs. The PRACH configuration period 710 and the PRACH configuration period 720 may be referred to as an association period 730. The association period 730 may refer to a period for indicating (or mapping) all SSBs transmitted from the base station 110.

FIG. 7 illustrates an example of a PRACH configuration period (e.g., the PRACH configuration period 710 or 720) and an association period (e.g., the association period 730), but it is not limited thereto. For example, the PRACH configuration period and the association period may be configured as illustrated in the following table.

[Table 1]

| PRACH configuration period (msec) | Association period value |
|---|---|
| 10 | {1, 2, 4, 8, 16} |
| 20 | {1, 2, 4, 8} |
| 40 | {1, 2, 4} |
| 80 | {1, 2} |
| 160 | {1} |

Referring to the Table 1, the PRACH configuration period may be set as one of 10 [msec], 20 [msec], 40 [msec], 80 [msec], and 160 [msec]. The association period value may be set based on the PRACH configuration period. For example, the length of the association period may be set to be equal to or less than 160 [msec]. The association period value may be configured such that the length of the association period is set to be equal to or less than 160 [msec].

For example, in a case that the PRACH configuration period is 10 [msec], the association period value may be set as one of 1, 2, 4, 8, and 16. in a case that the association period value is 1, the length of the association period may be set as 10 [msec]. In a case that the association period value is 8, the length of the association period may be set as 80 [msec].

For example, in a case that the PRACH configuration period is 80 [msec], the association period value may be set as one of 1 and 2. In a case that the association period value is 1, the length of the association period may be set as 80 [msec]. In a case that the association period value is 2, the length of the association period may be set as 160 [msec].

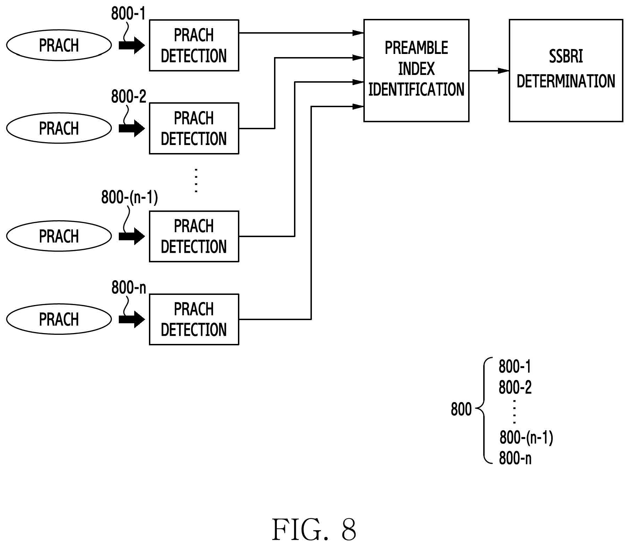

FIG. 8 illustrates an example of an operation of performing PRACH detection according to a reception path.

Referring to FIG. 8, a base station 110 (e.g., the DU 210 of FIG. 2A) may receive a PRACH signal from an RO. For example, the PRACH signal may correspond to an SSBRI. The PRACH signal may be transmitted through an RO corresponding to the SSBRI.

The base station 110 may include one or more reception paths 800. The one or more reception paths 800 may refer to paths between a DU (e.g., the DU 210 of FIG. 2A) and an RU (e.g., the RU 220 of FIG. 2A) included in the base station 110. The one or more reception paths 800 may refer to the number of streams configured between the DU and the RU.

For example, the base station 110 (e.g., the DU 210) may receive a PRACH signal through the one or more reception paths 800. The base station 110 may perform a PRACH detection operation based on the one or more reception paths 800. As an example, the base station 110 may perform a PRACH signal detection operation in a first reception path 800-1. The base station 110 may identify a preamble index (or a sequence) related to the PRACH signal in the first reception path 800-1. The base station 110 may perform a PRACH signal detection operation in a second reception path 800-2. The base station 110 may identify a preamble index (or a sequence) related to the PRACH signal in the second reception path 800-2. The base station 110 may perform a PRACH signal detection operation in an n-1-th reception path 800-(n-1). The base station 110 may identify a preamble index (or a sequence) related to the PRACH signal in the n-1-th reception path 800-(n-1). The base station 110 may perform a PRACH signal detection operation in an n-th reception path 800-n. The base station 110 may identify a preamble index (or a sequence) related to the PRACH signal in the n-th reception path 800-n.

The base station 110 may identify a covariance between a sequence for a preamble index among the one or more reception paths 800 and a reference sequence corresponding to a corresponding SSB. The base station 110 may identify a preamble index having the largest covariance. The base station 110 may identify an SSBRI based on the identified preamble index. The base station 110 may determine one SSB among a plurality of SSBs based on the identified preamble index. The base station 110 may perform a physical random access operation based on the determined SSB.

For example, before a physical random access procedure is started, a layer 1 may receive a set of SS/PBCH block indexes from upper layers and may provide a corresponding RSRP measurement set to the upper layers. Before the physical random access procedure is started, the layer 1 may receive an indication to perform a type-1 random access procedure or a type-2 random access procedure.

Before the physical random access procedure is started, the layer 1 may receive the following information from an upper layer.

- A configuration of a PRACH transmission parameter (e.g., a PRACH preamble format, a time resource, a frequency resource for PRACH transmission)
- A parameter for determining a root sequence and a corresponding cyclic shift from a PRACH preamble sequence set (an index to a logical root sequence table, an index to a cyclic shift (NCS), and a set type (unrestricted, restricted set A, or restricted set B))

From a physical layer perspective, a type-1 L1 random access procedure may include transmission of a Random Access Response (RAR) message (or signal) including a random access preamble (Msg1) and a physical downlink control channel (PDCCH)/physical downlink shared channel (PDSCH) (Msg2) in PRACH, and the Type-1 L1 random access procedure may include transmission of a PUSCH scheduled by a RAR UL grant and a PDSCH for contention resolution, if applicable.

From the physical layer perspective, a type-2 L1 random access procedure may include random access preamble transmission of PRACH and PUSCH (MsgA) and reception of a RAR message in which PDCCH/PDSCH (MsgB) is included, and the Type-2 L1 random access procedure may include transmission of a physical uplink shared channel (PUSCH) scheduled by a fallback RAR UL grant and transmission of PDSCH for contention resolution, if applicable.

In a case that a random access procedure is initiated by a PDCCH order for UE, PRACH transmission may be performed using the same subcarrier spacing (SCS) as PRACH transmission initiated by an upper layer.

In a case that the UE is configured with 2 UL carriers for a serving cell and the UE detects the PDCCH order, the UE may determine a UL carrier for a corresponding PRACH transmission using a UL/SUL indicator field value from the detected PDCCH order.

In a case that the plurality of SSBs 520 are transmitted using the plurality of beams as illustrated in FIG. 5B, an overhead of an SSB may increase. A downlink throughput according to resource occupation of the plurality of SSBs may decrease.

In a case that the plurality of SSBs 520 are transmitted using the plurality of beams as illustrated in FIG. 5B, a latency by a time for call access for measurement for the plurality of SSBs 520 may increase. In addition, a latency by a time for which a terminal 120 waits until a RACH occasion corresponding to the selected SSB may increase.

In a case that the plurality of SSBs 520 are transmitted as illustrated in FIG. 5B, a coverage may increase, but a latency may increase as described above. In the following specification, in a case that the plurality of SSBs 520 are transmitted as illustrated in FIG. 5B, an embodiment for receiving a PRACH through the plurality of beams (or the plurality of beamforming parameter sets) will be described.

In addition, as the number of the one or more reception paths 800 increases, a signal to interference plus noise ratio (SINR) of a beam based on each of the one or more reception paths 800 may be secured, but the number of one or more reception paths 800 may be limited according to a configuration (or a capability) of the base station 110. In a case that the number of the one or more reception paths 800 is not sufficient, it may be difficult to obtain a beamforming gain through the plurality of SSBs 520. Therefore, in the following specification, in order to obtain the beamforming gain by an occasion, an embodiment for differently setting a beam (or a reception beam, or a logical beam (LB)) over time will be described.

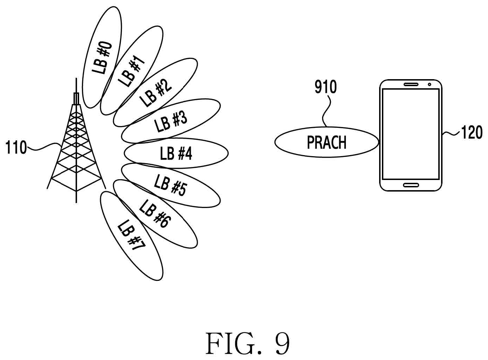

FIG. 9 illustrates an example of a plurality of logical beams (LBs) configured to receive a PRACH.

Referring to FIG. 9, a base station 110 may transmit a plurality of synchronization signal blocks (SSBs) (not illustrated). For example, in a case that the number of one or more reception paths of the base station 110 is smaller than the number of logical beams (LBs) described below, the plurality of SSBs may be transmitted.

For example, a DU (e.g., the DU 210 of FIG. 2A) may transmit, to a terminal 120, information including a plurality of SSBs (or SS/PBCH blocks) through a RU (e.g., the RU 220 of FIG. 2A). The RU may transmit, to the terminal 120, the information including the plurality of SSBs (or the SS/PBCH blocks) received from the DU. For example, the plurality of SSBs may be referred to as multiple SSBs. The plurality of SSBs may be transmitted to the terminal 120 sequentially. The plurality of SSBs may configure one synchronization signal (SS) burst set. The plurality of SSBs may correspond to the plurality of SSBs 520 of FIG. 5B.

The terminal 120 may receive the plurality of SSBs from the base station 110. The terminal 120 may measure (or obtain, identify) reference signal received power (RSRP) for each of the plurality of SSBs. The terminal 120 may select (or determine) one of the plurality of SSBs based on the RSRP for the plurality of SSBs. For example, the terminal 120 may select an SSB having the highest RSRP from among the plurality of SSBs.

The terminal 120 may receive a system information block 1 (SIB1) from the base station 110 after receiving the plurality of SSBs. The SIB1 may include information on a preamble. The terminal 120 may transmit a PRACH signal 910 to the base station 110 in a RACH occasion corresponding to a selected SSB. For example, the terminal 120 may transmit the PRACH signal 910 including the preamble in order to inform the base station 110 of the selected SSB (or an SSBRI). The base station 110 may identify the SSB (or the SSBRI) selected by the terminal 120 based on the RACH occasion in which the PRACH signal 910 is transmitted and/or the preamble.

The base station 110 may receive the PRACH signal 910 by using different logical beams (LBs) over time. The logical beam (LB) may be configured based on a beamforming parameter set. For example, the LB may refer to a beam (or a reception beam) for receiving the PRACH signal 910 (or an uplink signal). For example, a plurality of LBs may be used for reception of a PRACH signal for the same SSBRI.

The base station 110 may receive the PRACH signal 910 by using the plurality of LBs (or a plurality of beamforming parameter sets). The base station 110 may identify an LB that most accurately receives the PRACH signal 910. For example, the plurality of LBs may include an LB #0, an LB #1, an LB #2, an LB #3, an LB #4, an LB #5, an LB #6, and an LB #7. The base station 110 may identify that the PRACH signal 910 is most accurately received through the LB #2.

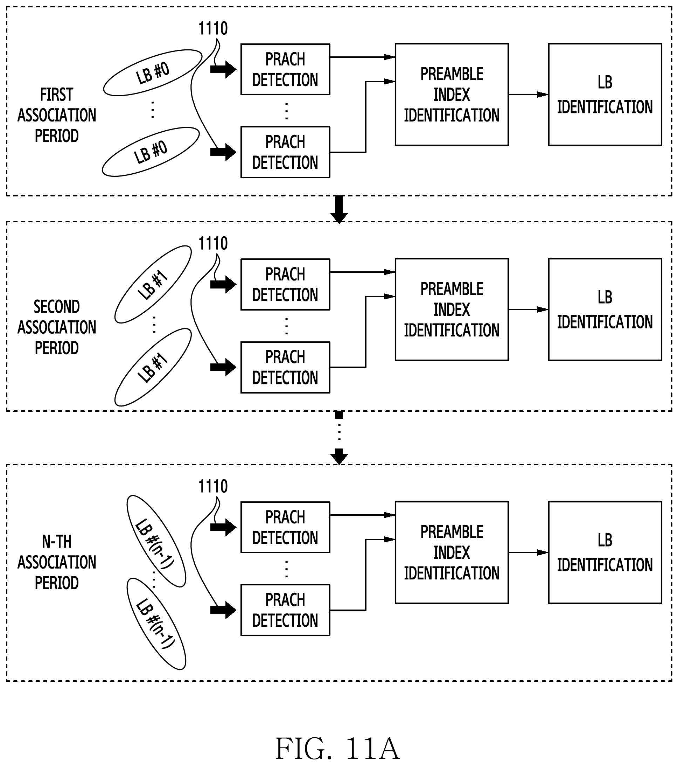

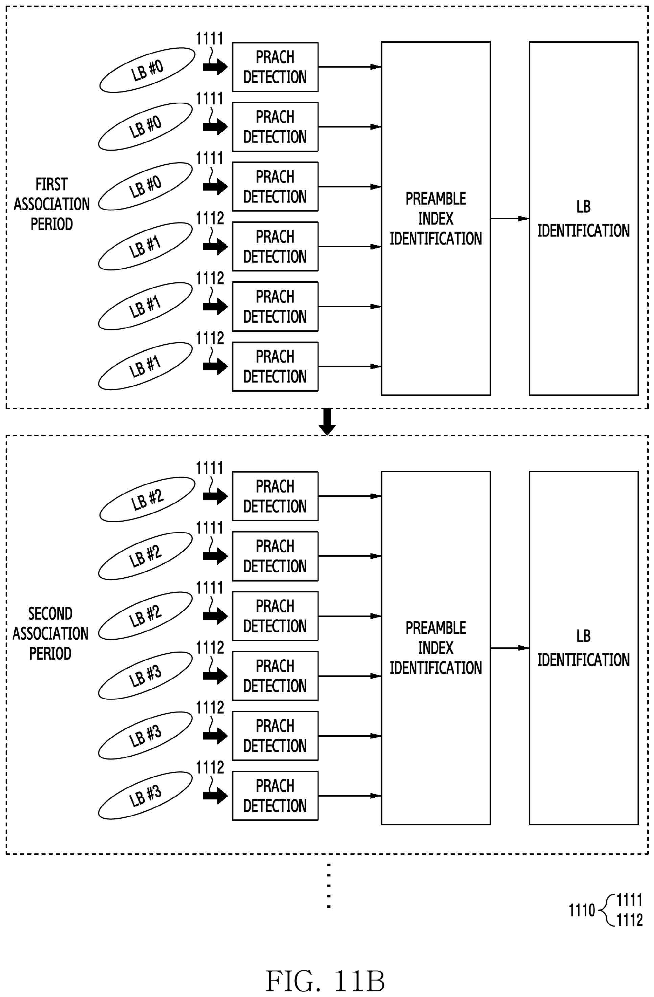

For example, the base station 110 may identify one of the plurality of LBs based on a covariance between a sequence (or a preamble) according to a PRACH signal detected in each of the plurality of LBs and a reference sequence. The base station 110 may transmit, to the terminal 120, a downlink signal (e.g., a RAR signal) by using a beamforming parameter set corresponding to the identified LB. An operation of the base station 110 for identifying a reception path that most accurately receives the PRACH signal 910 will be described later with reference to FIG. 11A or FIG. 11B.

As illustrated in FIG. 7, an association period may be configured to indicate all of the plurality of SSBs. A plurality of association periods may be configured as the association period is repeated with a designated period. One association period may be configured, based on the plurality of LBs, to receive a PRACH signal. For example, a first association period may include a RACH occasion for receiving a PRACH signal for a first SSB based on the LB #0. The first association period may include a RACH occasion for receiving a PRACH signal for a second SSB based on the LB #0. For example, a second association period may include a RACH occasion for receiving a PRACH signal for the first SSB based on the LB #1. The second association period may include a RACH occasion for receiving a PRACH signal for the second SSB based on the LB #1.

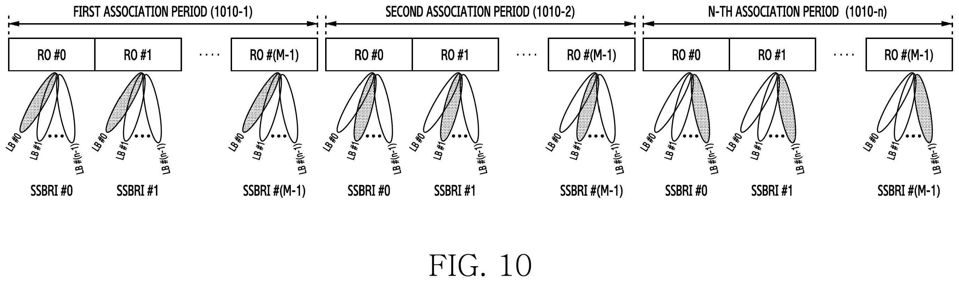

A detailed example of the plurality of association periods as in the above-described example will be described later with reference to FIG. 10.

In FIG. 9, although an example in which the PRACH signal 910 is received by using 8 LBs (or 8 beamforming parameter sets) is illustrated, it is not limited thereto. For example, the number of the plurality of LBs may be configured in various ways. The number of the plurality of LBs may be configured to be equal to or less than the number of reception paths between the DU and the RU of the base station 110.

FIG. 10 illustrates an example of a plurality of association periods configured to receive a PRACH signal.

Referring to FIG. 10, a base station 110 may receive a PRACH signal corresponding to an SSB selected by a terminal 120 among a plurality of SSBs. The base station 110 may receive the PRACH signal by using a plurality of LBs (or a plurality of beamforming parameter sets).

The base station 110 may configure a plurality of association periods to receive the PRACH signal. For example, the plurality of association periods may include a first association period 1010-1 to a n-th association period 1010-n.

One association period (e.g., the first association period 1010-1) may include RACH occasions (hereinafter, RO) for the plurality of SSBs (or a plurality of SSBRIs) by using one LB (e.g., an LB #0). The number of ROs included in one association period may correspond to the number of the plurality of SSBs.

According to an embodiment, the number of the plurality of LBs may be set to n, and the number of the plurality of SSBs may be set to M.

For example, the first association period 1010-1 may include a plurality of ROs for receiving a PRACH signal by using the LB #0. The first association period 1010-1 may include an RO #0 to an RO #M-1. The RO #0 in the first association period 1010-1 may refer to a time and a frequency band for receiving a PRACH signal for an SSBRI #0 by using the LB #0. An RO #1 in the first association period 1010-1 may refer to a time and a frequency band for receiving a PRACH signal for an SSBRI #1 by using the LB #0. The RO #M-1 in the first association period 1010-1 may refer to a time and a frequency band for receiving a PRACH signal for an SSBRI #M-1 by using the LB #0.

For example, a second association period 1010-2 may include a plurality of ROs for receiving a PRACH signal by using an LB #1. The second association period 1010-2 may include an RO #0 to an RO #M-1. The RO #0 in the second association period 1010-2 may refer to a time and a frequency band for receiving a PRACH signal for an SSBRI #0 by using the LB #1. The RO #1 in the second association period 1010-2 may refer to a time and a frequency band for receiving a PRACH signal for an SSBRI #1 by using the LB #1. The RO #M-1 in the second association period 1010-2 may refer to a time and a frequency band for receiving a PRACH signal for an SSBRI #M-1 by using the LB #1.

For example, the n-th association period 1010-n may include a plurality of ROs for receiving a PRACH signal by using an LB #n-1. The n-th association period 1010-n may include an RO #0 to an RO #M-1. The RO #0 in the n-th association period 1010-n may refer to a time and a frequency band for receiving a PRACH signal for an SSBRI #0 by using the LB #n-1. The RO #1 in the n-th association period 1010-n may refer to a time and a frequency band for receiving a PRACH signal for an SSBRI #1 by using the LB #n-1. The RO #M-1 in the n-th association period 1010-n may refer to a time and a frequency band for receiving a PRACH signal for an SSBRI #M-1 by using the LB #n-1.

An association period index, an SSBRI, and a logical beam identifier (LBID) according to the above-described example may be set as illustrated in the following table.

[Table 2]

| Associated period index | Wide beam ID mapping (SSB) | Narrow beam ID mapping |
|---|---|---|
| Associated period index #0 | SSBRI n | Logical beam ID = $0\%N_{SSBRI}$ |
| Associated period index #1 | SSBRI n | Logical beam ID = $1\%N_{SSBRI}$ |
| ... | ... | ... |
| Associated period index #M-1 | SSBRI n | Logical beam ID = $(M-1)\%N_{SSBRI}$ |

Referring to the Table 2, the association period index may indicate a plurality of association periods. For example, an association period index #0 may indicate the first association period 1010-1. 'Wide beam ID mapping' may indicate an SSBRI within an association period. 'Narrow beam ID mapping' may indicate an LBID set within the association period. The LBID may refer to a narrow beam ID defined for the same SSB (or SSBRI). The LBID may be configured through a modular operation performed by using the number of SSBRIs (NSSBRI).

According to an embodiment, a length of each of the plurality of association periods may be set to be equal to or less than 160 [ms].

FIG. 11A illustrates an example of an operation of a base station for performing PRACH detection for each reception path.

Referring to FIG. 11A, a base station 110 may receive, from a terminal 120, a PRACH signal for an SSB selected by the terminal 120 among a plurality of SSBs. The base station 110 may receive the PRACH signal through a plurality of reception paths 1110. The plurality of reception paths 1110 may correspond to one LB. The plurality of reception paths 1110 may correspond to one beamforming parameter set.

For example, a plurality of LBs may include n LBs. The plurality of LBs may include an LB #0 to an LB #n-1. A plurality of association periods may include n association periods. The plurality of association periods may include a first association period to an n-th association period.

Each of a plurality of LBs may be indicated by a logical beam identifier (LBID). An LBID corresponding to an SSBRI (or an SSBRI n) may be set as illustrated in the following equation.

【Equation 1】

$$'LBID' = 'association\ perod\ index' \% N_{SSBRI}$$

Referring to the Equation 1, 'LBID' is a value for indicating an LB. 'association period index' is a value for indicating an association period. Each of the plurality of association periods may be indicated by a value of 'association period index' (or 'associated period index'). NSSBRI is the number of SSBRIs (or the number of the plurality of SSBs). % operation is a modulo operation. 'LBID' is a remaining value obtained by dividing 'association period index' by NSSBRI. 'association period index' may be set as illustrated in the following equation.

【Equation 2】

$$'association\ perod\ index' = \left\lfloor \frac{SFN}{Association\ Period \times x} \right\rfloor$$

Referring to the Equation 2, SFN is a system frame number. 'Association Period' is the number of RACH configuration periods for mapping all of the plurality of SSBs transmitted from the base station 110. 'Association Period' may be an example of the association period value of the Table 1. x is a RACH configuration period. $\lfloor a \rfloor$ represents the largest integer equal to or less than a. $\lfloor a \rfloor$ represents a floor function.

According to an embodiment, the terminal 120 may transmit, to the base station 110, the PRACH signal for the SSB selected among the plurality of SSBs.

For example, in the first association period, the base station 110 (e.g., the DU 210 of FIG. 2A) may receive a PRACH signal by using the LB #0 through a plurality of reception paths. In the first association period, the base station 110 (e.g., the DU 210 of FIG. 2A) may receive the PRACH signal based on a first beamforming parameter set through the plurality of reception paths. As an example, in the first association period, the base station 110 (e.g., the DU 210 of FIG. 2A) may receive the PRACH signal by using the LB #0 configured according to the first beamforming parameter set through the plurality of reception paths. The base station 110 may identify a preamble index based on the PRACH signal received by using the LB #0 configured according to the first beamforming parameter set. As an example, the base station 110 may identify a reception path corresponding to a PRACH signal having a largest magnitude of a covariance between a sequence (or a preamble) according to the PRACH signal detected in each of the plurality of reception paths 1110 and a reference sequence (or a reference preamble). For example, the reference sequence may refer to a sequence corresponding to the preamble index. The sequence according to the PRACH signal identified in each of the plurality of reception paths 1110 may be obtained differently from the reference sequence according to a communication state. The base station 110 may obtain a covariance between the sequence according to the PRACH signal detected in each of the plurality of reception paths 1110 and the reference sequence. The base station 110 may identify the preamble index based on identifying the PRACH signal having the largest magnitude of the covariance.

For example, in the second association period, the base station 110 (e.g., the DU 210 of FIG. 2A) may receive a PRACH signal by using the LB #1 through a plurality of reception paths. In the second association period, the base station 110 (e.g., the DU 210 of FIG. 2A) may receive the PRACH signal based on a second beamforming parameter set through the plurality of reception paths. As an example, in the second association period, the base station 110 (e.g., the DU 210 of FIG. 2A) may receive the PRACH signal by using the LB #1 configured according to the second beamforming parameter set through the plurality of reception paths. The base station 110 may identify a preamble index based on the PRACH signal received by using the LB #1 configured according to the second beamforming parameter set.

For example, in the n-th association period, the base station 110 (e.g., the DU 210 of FIG. 2A) may receive a PRACH signal by using the LB #n-1 through a plurality of reception paths. In the n-th association period, the base station 110 (e.g., the DU 210 of FIG. 2A) may receive the PRACH signal based on an n-th beamforming parameter set through the plurality of reception paths. As an example, in the n-th association period, the base station 110 (e.g., the DU 210 of FIG. 2A) may receive the PRACH signal by using the LB #n-1 configured according to the n-th beamforming parameter set through the plurality of reception paths. The base station 110 may identify a preamble index based on the PRACH signal received by using the LB #n-1 configured according to the n-th beamforming parameter set.

The base station 110 may identify, among the plurality of LBs, an LB (or an LBID) having the highest covariance between the sequence according to the PRACH signal detected in each of the plurality of reception paths 1110 and the reference sequence. The base station 110 may identify a beamforming parameter set for configuring the identified LB. The base station 110 may transmit, to the terminal 120, a downlink signal (e.g., a RAR signal) by using the identified beamforming parameter set.

According to an embodiment, in the first association period, the base station 110 may identify a beamforming parameter set corresponding to the LB #0 for configuring a downlink signal based on a covariance between a sequence according to a PRACH signal detected in each of the plurality of reception paths 1110 and a reference sequence satisfying a designated condition. The base station 110 may also identify the beamforming parameter set corresponding to the LB #0 for configuring the downlink signal based on the covariance between the sequence according to the PRACH signal detected in each of the plurality of reception paths 1110 and the reference sequence satisfying the designated condition in the first association period even before receiving the PRACH signal in the second association period to the n-th association period.

According to an embodiment, the base station 110 may transmit, to the terminal 120, the downlink signal through the identified beamforming parameter set (or LB). For example, the downlink signal may include a random access response (RAR) signal corresponding to the PRACH signal, a physical downlink control channel (PDCCH) signal, or a physical downlink shared channel (PDSCH) signal.

For example, the downlink signal may be configured based on applying a weight to at least one antenna according to the identified beamforming parameter set. The base station 110 may configure the downlink signal and may transmit the downlink signal to the terminal 120 by applying the weight to the at least one antenna of the transceiver based on the identified beamforming parameter set.

FIG. 11B illustrates an example of an operation of a base station for performing PRACH detection for each reception path.

Referring to FIG. 11B, the base station 110 may receive, from the terminal 120, a PRACH signal for an SSB selected by the terminal 120 among a plurality of SSBs. The base station 110 may receive the PRACH signal through the plurality of reception paths 1110.

Unlike FIG. 11A, a portion of the plurality of reception paths 1110 may correspond to a portion of a plurality of LBs. The portion of the plurality of reception paths 1110 may correspond to at least one beamforming parameter set.

For example, 2 LBs may correspond to one association period. The base station 110 may receive a PRACH signal by using an LB #0 and an LB #1 in a first association period. The base station 110 may receive the PRACH signal by using the LB #0 through first reception paths 1111 among the plurality of reception paths 1110. The base station 110 may receive a PRACH signal by using the LB #1 through second reception paths 1112 among the plurality of reception paths 1110. The base station 110 may receive the PRACH signal by using an LB #2 and an LB #3 in a second association period. The base station 110 may receive a PRACH signal by using the LB #2 through the first reception paths 1111 among the plurality of reception paths 1110. The base station 110 may receive a PRACH signal by using the LB #3 through the second reception paths 1112 among the plurality of reception paths 1110.

In the first association period, the base station 110 (e.g., a DU 210 of FIG. 2A) may receive a PRACH signal based on a first beamforming parameter set through the first reception paths 1111. In the first association period, the base station 110 may receive the PRACH signal based on a second beamforming parameter set through the second reception paths 1112.

In the second association period, the base station 110 (e.g., the DU 210 of FIG. 2A) may receive the PRACH signal based on a third beamforming parameter set through the first reception paths 1111. In the second association period, the base station 110 may receive the PRACH signal based on a fourth beamforming parameter set through the second reception paths 1112.

In FIG. 11A, although an example in which one LB corresponds to one association period is illustrated, as in FIG. 11B, two or more LBs may correspond to one association period. As an example, in a case that two LBs among n LBs correspond to one association period, n/2 association periods may be configured.

The base station 110 may identify, among the plurality of LBs, an LB (or an LBID) having the highest covariance between the sequence according to the PRACH signal detected through the portion of the plurality of reception paths 1110 and the reference sequence. The base station 110 may identify a beamforming parameter set for configuring the identified LB. The base station 110 may transmit, to the terminal 120, a downlink signal (e.g., a RAR signal) by using the identified beamforming parameter set.

According to an embodiment, in a case that the number of the plurality of reception paths 1110 of the base station 110 is smaller than the number of a plurality of LBs described below, a plurality of SSBs may be transmitted. According to an embodiment, in a case that the number of the plurality of reception paths 1110 of the base station 110 is equal to or greater than the number of the plurality of LBs, a single SSB may be transmitted. However, it is not limited thereto.

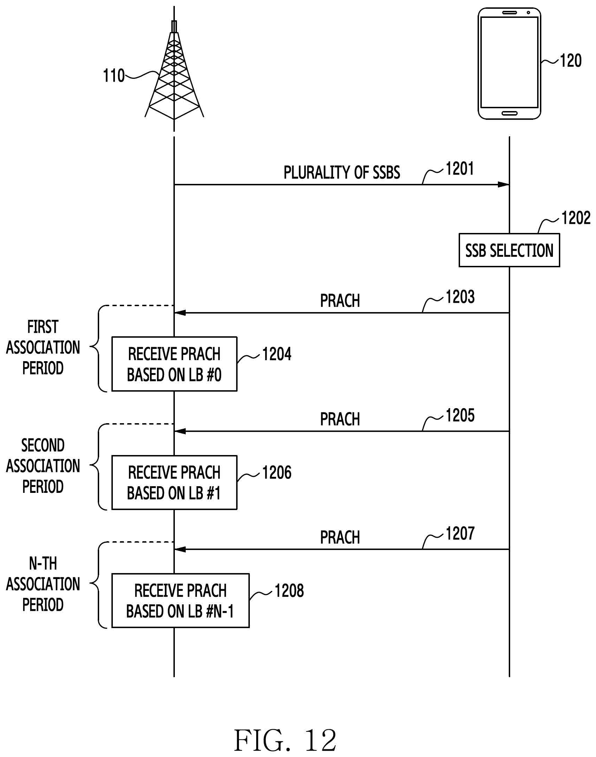

FIG. 12 illustrates an example of an operation of a base station and a terminal.

Referring to FIG. 12, in operation 1201, a base station 110 may transmit a plurality of synchronization signal blocks (SSBs) (or a plurality of SS/PBCH blocks). The base station 110 may transmit the plurality of SSBs based on a designated period (e.g., 20 ms).

In operation 1202, a terminal 120 may select an SSB among the plurality of SSBs. For example, the terminal 120 may receive the plurality of SSBs from the base station 110. For example, the terminal 120 may select an SSB having the highest RSRP among the plurality of SSBs. The terminal 120 may obtain downlink frequency synchronization and/or time synchronization through the selected SSB.

The terminal 120 may obtain a master information block (MIB) based on the selected SSB. For example, the MIB may include information on a numerology of a system information block 1 (SIB1) and information on a configuration of the SIB1. The terminal 120 may receive the SIB1 based on the selected SSB. The SIB1 may include information (or a parameter) for random access(e.g., initial random access).

According to an embodiment, the base station 110 may include a DU (e.g., the DU 210 of FIG. 2A) and an RU (e.g., the RU 220 of FIG. 2A). A plurality of reception paths (or a plurality of streams) may be set between the DU and the RU. The base station 110 may receive a PRACH signal through the plurality of reception paths. The base station 110 may receive the PRACH signal by using one of a plurality of LBs (or a plurality of reception beams) in one association period. The base station 110 may receive the PRACH signal by using one of the plurality of LBs (or the plurality of reception beams) through the plurality of reception paths in one association period. In operation 1203 to operation 1208, an operation of the base station 110 and the terminal 120 performed in a plurality of association periods will be described.

The operation 1203 and the operation 1204 may be performed in a first association period among the plurality of association periods. The terminal 120 may transmit, to the base station 110, a PRACH signal based on a selected SSB in the first association period. The terminal 120 may identify a RACH occasion (RO) corresponding to the SSB selected according to the operation 1202 in the first association period. For example, the first association period may include ROs corresponding to a plurality of SSBs. The base station 110 may identify an RO corresponding to the selected SSB among a plurality of ROs in the first association period. The terminal 120 may transmit the PRACH signal to the base station 110 through the RO corresponding to the selected SSB. The RU of the base station 110 may receive the PRACH signal from the terminal 120 through the RO. The DU may identify an SSBRI based on the RO.

For example, the base station 110 may receive a PRACH signal based on an LB #0. The first association period may be set to receive the PRACH signal by using the LB #0. Accordingly, the base station 110 may receive the PRACH signal based on the LB #0 in the first association period. In the first association period, the base station 110 may receive the PRACH signal by using the LB #0 configured according to a first beamforming parameter set. The base station 110 may identify a preamble index based on the PRACH signal received by using the LB #0.

The operation 1205 and the operation 1206 may be performed in a second association period among the plurality of association periods. The terminal 120 may transmit, to the base station 110, a PRACH signal based on a selected SSB in the second association period. The terminal 120 may identify a RACH occasion (RO) corresponding to the SSB selected according to the operation 1202 in the second association period. For example, the second association period may include ROs corresponding to a plurality of SSBs. The base station 110 may identify an RO corresponding to the selected SSB among a plurality of ROs in the second association period. The terminal 120 may transmit the PRACH signal to the base station 110 through the RO corresponding to the selected SSB. The RU of the base station 110 may receive the PRACH signal from the terminal 120 through the RO. The DU may identify an SSBRI based on the RO.

For example, the base station 110 may receive a PRACH signal based on an LB #1. The second association period may be set to receive the PRACH signal by using the LB #1. Accordingly, the base station 110 may receive the PRACH signal based on the LB #1 in the second association period. In the second association period, the base station 110 may receive the PRACH signal by using the LB #1 configured according to a second beamforming parameter set. The base station 110 may identify a preamble index based on the PRACH signal received by using the LB #1.

Although not illustrated for convenience of description, a third association period to an n-1-th association period may be set after the second association period. In the third association period to the n-1-th association period, operations identical or similar to the operation 1203 and the operation 1204 may be performed.

The operation 1207 and the operation 1208 may be performed in an n-th association period among the plurality of association periods. The terminal 120 may transmit, to the base station 110, a PRACH signal based on a selected SSB in the n-th association period. The terminal 120 may identify a RACH occasion (RO) corresponding to the SSB selected according to the operation 1202 in the n-th association period. For example, the n-th association period may include ROs corresponding to a plurality of SSBs. The base station 110 may identify an RO corresponding to the selected SSB among a plurality of ROs in the n-th association period. The terminal 120 may transmit the PRACH signal to the base station 110 through the RO corresponding to the selected SSB. The RU of the base station 110 may receive the PRACH signal from the terminal 120 through the RO. The DU may identify an SSBRI based on the RO.

For example, the base station 110 may receive a PRACH signal based on an LB #n-1. The n-th association period may be set to receive the PRACH signal by using the LB #n-1. Accordingly, the base station 110 may receive the PRACH signal based on the LB #n-1 in the n-th association period. In the n-th association period, the base station 110 may receive the PRACH signal by using the LB #n-1 configured according to an n-th beamforming parameter set. The base station 110 may identify a preamble index based on the PRACH signal received by using the LB #n-1.

Although not illustrated, the base station 110 may determine one LB among the plurality of LBs. For example, the base station 110 may identify, among the plurality of LBs, an LB (or an LBID) having the highest covariance between a sequence according to a PRACH signal detected in each of a plurality of reception paths 1110 and a reference sequence. The base station 110 may identify a beamforming parameter set for configuring the identified LB. The base station 110 may transmit, to the terminal 120, a downlink signal (e.g., a RAR signal) by using the identified beamforming parameter set.

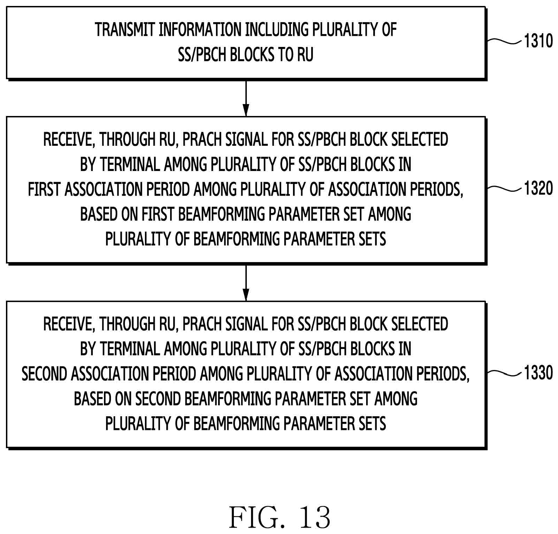

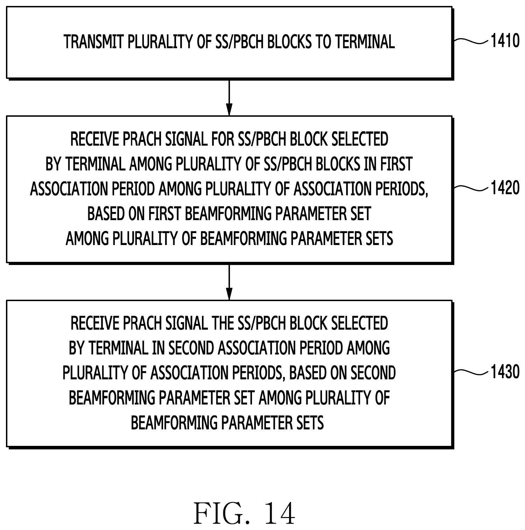

According to an embodiment, the base station 110 may include the DU and the RU. In FIG. 13 and FIG. 14 below, a detailed operation of the DU and the RU according to the above-described embodiment will be described.

FIG. 13 illustrates a flowchart related to an operation of a DU.

Referring to FIG. 13, in operation 1310, a DU (e.g., the DU 210 of FIG. 2A) included in a base station 110 may transmit, to a terminal 120, information including a plurality of SS/PBCH blocks (or a plurality of SSBs) through an RU. For example, the DU may control the RU to transmit the plurality of SS/PBCH blocks. For example, the DU may control the RU to transmit the plurality of SS/PBCH blocks based on a designated period (e.g., 20 ms).

In operation 1320, the DU may receive, through the RU, a PRACH signal for an SS/PBCH block selected by the terminal 120 among the plurality of SS/PBCH blocks in a first association period among a plurality of association periods, based on a first beamforming parameter set among a plurality of beamforming parameter sets.

For example, the terminal 120 may select one of the plurality of SS/PBCH blocks based on receiving the plurality of SS/PBCH blocks. The terminal 120 may transmit a PRACH signal to the RU (or the DU) in a RACH occasion corresponding to the selected SS/PBCH block. The DU may identify that the PRACH signal is received in the RACH occasion corresponding to the SS/PBCH block selected by the terminal 120. The DU may identify that the terminal 120 has selected an SS/PBCH block indicated by the PRACH signal among the plurality of SS/PBCH blocks based on identifying that the PRACH signal is received in the RACH occasion corresponding to the SS/PBCH block selected by the terminal 120. The DU may identify an SSBRI based on identifying that the PRACH signal is received in the RACH occasion corresponding to the selected SS/PBCH block.

For example, the plurality of association periods may be configured to receive the PRACH signal. Each of the plurality of association periods may include a plurality of RACH occasions. The plurality of RACH occasions may correspond to each of the plurality of SS/PBCH blocks.

For example, the plurality of association periods may be respectively associated with the plurality of beamforming parameter sets. As an example, the first association period among the plurality of association periods may be set to receive a PRACH signal for the SS/PBCH block selected by the terminal 120 by using the first beamforming parameter set. As an example, a second association period among the plurality of association periods may be set to receive the PRACH signal for the SS/PBCH block selected by the terminal 120 by using a second beamforming parameter set.

In operation 1330, the DU may receive, through the RU, the PRACH signal for the SS/PBCH block selected by the terminal 120 among the plurality of SS/PBCH blocks in the second association period among the plurality of association periods, based on the second beamforming parameter set among the plurality of beamforming parameter sets.

For example, the second association period may be distinct from the first association period. The second association period may be set after the first association period. For example, the second beamforming parameter set may be distinct from the first beamforming parameter set. A beam (or a reception beam, or a logical beam (LB)) configured by the second beamforming parameter set may be distinct from a beam configured by the first beamforming parameter set. However, it is not limited thereto.

According to an embodiment, the DU may receive a PRACH signal based on each of the plurality of beamforming parameter sets. For example, the DU may receive the PRACH signal based on each of the plurality of beamforming parameter sets in the plurality of association periods. The DU may identify one parameter set among the plurality of beamforming parameter sets based on a result of reception of the PRACH signal. The DU may control the RU to transmit a downlink signal to the terminal 120 through the identified parameter set. For example, the DU may identify a beamforming parameter set having the highest covariance between a sequence according to the PRACH signal detected in each of the plurality of association periods and a reference sequence. The DU may transmit a downlink signal (e.g., an RAR signal) to the terminal 120 through the RU by using the identified beamforming parameter set.

For example, the downlink signal may be configured based on applying a weight to at least one antenna of the transceiver according to the identified beamforming parameter set.

For example, the downlink signal may include a random access response (RAR) signal corresponding to the PRACH signal, a physical downlink control channel (PDCCH) signal, or a physical downlink shared channel (PDSCH) signal. As an example, the DU may control the RU to transmit the RAR signal corresponding to the PRACH signal to the terminal 120 through the identified beamforming parameter set.

FIG. 14 illustrates a flowchart related to an operation of an RU.

Referring to FIG. 14, in operation 1410, an RU included in a base station 110 may transmit a plurality of SS/PBCH blocks to a terminal 120. For example, the RU may transmit the plurality of SS/PBCH blocks to the terminal 120 based on information received from a DU and including the plurality of SS/PBCH blocks. For example, the RU may transmit the plurality of SS/PBCH blocks based on a designated period (e.g., 20 ms).

In operation 1420, an RU may receive a PRACH signal for an SS/PBCH block selected by the terminal 120 among the plurality of SS/PBCH blocks in a first association period among a plurality of association periods, based on a first beamforming parameter set among a plurality of beamforming parameter sets.

For example, the terminal 120 may select one of the plurality of SS/PBCH blocks based on receiving the plurality of SS/PBCH blocks. The terminal 120 may transmit a PRACH signal to the RU in a RACH occasion corresponding to the selected SS/PBCH block. The RU may transmit the PRACH signal received in the RACH occasion corresponding to the SS/PBCH block to the DU. The DU may identify that the terminal 120 has selected an SS/PBCH block indicated by the PRACH signal among the plurality of SS/PBCH blocks based on identifying that the PRACH signal is received in the RACH occasion corresponding to the SS/PBCH block selected by the terminal 120.

For example, the plurality of association periods may be configured to receive the PRACH signal. Each of the plurality of association periods may include a plurality of RACH occasions. The plurality of RACH occasions may correspond to each of the plurality of SS/PBCH blocks.

For example, the plurality of association periods may be respectively associated with the plurality of beamforming parameter sets. As an example, the first association period among the plurality of association periods may be set to receive a PRACH signal for the SS/PBCH block selected by the terminal 120 by using the first beamforming parameter set. As an example, a second association period among the plurality of association periods may be set to receive the PRACH signal for the SS/PBCH block selected by the terminal 120 by using a second beamforming parameter set.

In operation 1430, the RU may receive the PRACH signal for the SS/PBCH block selected by the terminal 120 in the second association period among the plurality of association periods, based on the second beamforming parameter set among the plurality of beamforming parameter sets.

For example, the second association period may be distinct from the first association period. The second association period may be set after the first association period. For example, the second beamforming parameter set may be distinct from the first beamforming parameter set. A beam (or a reception beam, or a logical beam (LB)) configured by the second beamforming parameter set may be distinct from a beam configured by the first beamforming parameter set. However, it is not limited thereto.

According to an embodiment, the RU may receive a PRACH signal based on each of the plurality of beamforming parameter sets. For example, the RU may receive the PRACH signal based on each of the plurality of beamforming parameter sets in the plurality of association periods. The RU may receive one beamforming parameter set among the plurality of beamforming parameter sets received from the DU. The RU may transmit a downlink signal (e.g., an RAR signal) to the terminal 120 through the received beamforming parameter set.

For example, the downlink signal may be configured based on applying a weight to at least one antenna of the transceiver according to the identified beamforming parameter set.

For example, the downlink signal may include a random access response (RAR) signal corresponding to the PRACH signal, a physical downlink control channel (PDCCH) signal, or a physical downlink shared channel (PDSCH) signal. As an example, the RU may transmit the RAR signal corresponding to the PRACH signal to the terminal 120 through a beamforming parameter set received from the DU.

According to an embodiment, an electronic device performed by a distributed unit (DU) may comprise at least one transceiver comprising a fronthaul transceiver, memory, comprising one or more storage media, storing instructions, and at least one processor comprising processor circuitry. The instructions, when executed by the at least one processor individually and collectively, may cause the electronic device to transmit information comprising a plurality of synchronization signal/physical broadcast channel (SS/PBCH) blocks to a radio unit (RU). The instructions, when executed by the at least one processor individually and collectively, may cause the electronic device to receive, based on a first beamforming parameter set among a plurality of beamforming parameter sets, a physical random access channel (PRACH) signal related to an SS/PBCH block selected by a terminal among the plurality of SS/PBCH blocks in a first association period among a plurality of association periods set for the plurality of SS/PBCH blocks through the RU. The instructions, when executed by the at least one processor individually and collectively, may cause the electronic device to receive, based on a second beamforming parameter set, distinct from the first beamforming parameter, among the plurality of beamforming parameter sets, the PRACH signal related to the selected SS/PBCH block in a second association period, distinct from the first association period, among the plurality of association periods through the RU.

According to an embodiment, each of the plurality of association periods may comprise a plurality of random access channel (RACH) occasions. The plurality of RACH occasions may correspond to the plurality of SS/PBCH blocks respectively.

According to an embodiment, the instructions, when executed by the at least one processor individually and collectively, may cause the electronic device to receive, based on each of the plurality of beamforming parameter sets, the PRACH signal through the RU. The instructions, when executed by the at least one processor individually and collectively, may cause the electronic device to identify, based on a result of reception of the PRACH signal, one beamforming parameter set among the plurality of beamforming parameter sets. The instructions, when executed by the at least one processor individually and collectively, may cause the electronic device to control the RU to transmit a downlink signal through the identified beamforming parameter set to the terminal.

According to an embodiment, the downlink signal may comprise a random access response (RAR) signal corresponding to the PRACH signal, a physical downlink control channel (PDCCH) signal, or a physical downlink shared channel (PDSCH) signal.

According to an embodiment, the plurality of association periods may be related to the plurality of beamforming parameter sets respectively.

According to an embodiment, each of the plurality of association periods may be set to 160 milliseconds (ms) or less.

According to an embodiment, an electronic device performed by a radio unit (RU), may comprise at least one transceiver comprising a fronthaul transceiver, memory, comprising one or more storage media, storing instructions, and at least one processor comprising processing circuitry. The instructions, when executed by the at least one processor individually and collectively, may cause the electronic device to transmit, based on information comprising a plurality of synchronization signal/physical broadcast channel (SS/PBCH) blocks which is received from a distributed unit (DU), the plurality of SS/PBCH blocks to a terminal. The instructions, when executed by the at least one processor individually and collectively, may cause the electronic device to receive, based on a first beamforming parameter set among a plurality of beamforming parameter sets, a physical random access channel (PRACH) signal related to an SS/PBCH block selected by the terminal among the plurality of SS/PBCH blocks in a first association period among a plurality of association periods set for the plurality of SS/PBCH blocks. The instructions, when executed by the at least one processor individually and collectively, may cause the electronic device to receive, based on a second beamforming parameter set, distinct from the first beamforming parameter, among the plurality of beamforming parameter sets, the PRACH signal related to the selected SS/PBCH block in a second association period, distinct from the first association parameter, among the plurality of association periods.

According to an embodiment, each of the plurality of association periods may comprise a plurality of random access channel (RACH) occasions. The plurality of RACH occasions may correspond to the plurality of SS/PBCH blocks respectively.

According to an embodiment, the instructions, when executed by the at least one processor individually or collectively, may cause the electronic device to, based on each of the plurality of beamforming parameter sets, receive the PRACH signal. The instructions, when executed by the at least one processor individually and collectively, may cause the electronic device to receive from the DU, one beamforming parameter set among the plurality of beamforming parameter sets which is identified based on a result of reception of the PRACH signal. The instructions, when executed by the at least one processor individually and collectively, may cause the electronic device to transmit a downlink signal to the terminal through the identified beamforming parameter set.

According to an embodiment, the downlink signal may comprise a random access response (RAR) signal corresponding to the PRACH signal, a physical downlink control channel (PDCCH) signal, or a physical downlink shared channel (PDSCH) signal.

According to an embodiment, a method performed by a distributed unit (DU) may comprise transmitting information comprising a plurality of synchronization signal/physical broadcast channel (SS/PBCH) blocks to a radio unit (RU). The method may comprise receiving, based on a first beamforming parameter set among a plurality of beamforming parameter sets, a physical random access channel (PRACH) signal related to an SS/PBCH block selected by a terminal among the plurality of SS/PBCH blocks in a first association period among a plurality of association periods set for the plurality of SS/PBCH blocks through the RU. The method may comprise receiving, based on a second beamforming parameter set, distinct from the first beamforming parameter, among the plurality of beamforming parameter sets, the PRACH signal related to the selected SS/PBCH block in a second association period, distinct from the first association parameter, among the plurality of association periods through the RU.

According to an embodiment, each of the plurality of association periods may comprise a plurality of random access channel (RACH) occasions. The plurality of RACH occasions may correspond to the plurality of SS/PBCH blocks respectively.

According to an embodiment, the method may comprise receiving, based on each of the plurality of beamforming parameter sets, the PRACH signal through the RU. The method may comprise identifying, based on a result of reception of the PRACH signal, one beamforming parameter set among the plurality of beamforming parameter sets. The method may comprise controlling the RU to transmit a downlink signal through the identified beamforming parameter set to the terminal.

According to an embodiment, the downlink signal may comprise a random access response (RAR) signal corresponding to the PRACH signal, a physical downlink control channel (PDCCH) signal, or a physical downlink shared channel (PDSCH) signal.

According to an embodiment, the plurality of association periods may be related to the plurality of beamforming parameter sets respectively.

According to an embodiment, each of the plurality of association periods may be set to 160 milliseconds (ms) or less.

According to an embodiment, a method performed by a radio unit (RU) may comprise transmitting, based on information comprising a plurality of synchronization signal/physical broadcast channel (SS/PBCH) blocks which is received from a distributed unit (DU), the plurality of SS/PBCH blocks to a terminal. The method may comprise receiving, based on a first beamforming parameter set among a plurality of beamforming parameter sets, a physical random access channel (PRACH) signal related to an SS/PBCH block selected by the terminal among the plurality of SS/PBCH blocks in a first association period among a plurality of association periods set for the plurality of SS/PBCH blocks. The method may comprise receiving, based on a second beamforming parameter set, distinct from the first beamforming parameter, among the plurality of beamforming parameter sets, the PRACH signal related to the selected SS/PBCH block in a second association period, distinct from the first association parameter, among the plurality of association periods.

According to an embodiment, each of the plurality of association periods may comprise a plurality of random access channel (RACH) occasions. The plurality of RACH occasions may correspond to the plurality of SS/PBCH blocks respectively.

According to an embodiment, the method may comprise, based on each of the plurality of beamforming parameter sets, receiving the PRACH signal. The method may comprise receiving from the DU, one beamforming parameter set among the plurality of beamforming parameter sets which is identified based on a result of reception of the PRACH signal. The method may comprise transmitting a downlink signal to the terminal through the identified beamforming parameter set.

According to an embodiment, the downlink signal may comprise a random access response (RAR) signal corresponding to the PRACH signal, a physical downlink control channel (PDCCH) signal, or a physical downlink shared channel (PDSCH) signal.

According to the above-described embodiments, a plurality of beams (e.g., a logical beam (LB)) may be applied to a plurality of reception paths. Accordingly, a coverage may be secured. However, in order for an SINR of a beam to be sufficiently secured in each of the plurality of reception paths, the number of the plurality of reception paths should be large. However, in a case that the number of the plurality of reception paths is not sufficient, it may be difficult to obtain a beamforming gain by the plurality of beams at the same time. According to the above-described embodiments, in a case that it is difficult to obtain a beam gain by an occasion (or a beam direction), the beam (e.g., a reception beam, or the LB) may be differently disposed over time. According to the above-described embodiments, without changing an existing standard for an SSB and a PRACH, an effect of obtaining the beamforming gain may be achieved by using the plurality of beams.

According to the above-described embodiment, the plurality of beams may be used even in a case that the number of the plurality of reception paths is not sufficient. The above-described embodiment may be applied even in a case that the number of LBs for the same SSB is limited or in a case that a coverage is limited due to a limitation of available reception paths per LB.

According to the above-described embodiment, the number of a plurality of SSBs may be reduced, so that a downlink overhead may be reduced. According to the above-described embodiment, the SSB may be defined as a wide beam. The LB may be defined as a narrow beam configured within the SSB.

According to the above-described embodiment, different LBIDs may be allocated for the same SSBRI by distributing allocation of the beam (e.g., the LB) in a time domain.

Methods according to embodiments described in claims or specifications of the present disclosure may be implemented as a form of hardware, software, or a combination of hardware and software.

In a case of implementing as software, a computer-readable storage medium for storing one or more programs (software module) may be provided. The one or more programs stored in the computer-readable storage medium are configured for execution by one or more processors in an electronic device. The one or more programs include instructions that cause the electronic device to execute the methods according to embodiments described in claims or specifications of the present disclosure. The one or more programs may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore™), or between two user devices (e.g., smart phones) directly. In the case of being distributed online, at least part of the computer program product may be temporarily generated or at least temporarily stored in the machine-readable storage medium, such as memory of the manufacturer's server, the application store's server, or a relay server.

Such a program (software module, software) may be stored in a random access memory, a non-volatile memory including a flash memory, a read only memory (ROM), an electrically erasable programmable read only memory (EEPROM), a magnetic disc storage device, an optical storage device (e.g., a compact disc-ROM (CD-ROM), digital versatile discs (DVDs), or other formats), or a magnetic cassette. Alternatively, it may be stored in memory configured with a combination of some or all of them. In addition, a plurality of configuration memories may be included.

Additionally, a program may be stored in an attachable storage device that may be accessed through a communication network such as the Internet, Intranet, local area network (LAN), wide area network (WAN), or storage area network (SAN), or a combination thereof. Such a storage device may be connected to a device performing an embodiment of the present disclosure through an external port. In addition, a separate storage device on the communication network may also be connected to a device performing an embodiment of the present disclosure.

In the above-described specific embodiments of the present disclosure, components included in the disclosure are expressed in the singular or plural according to the presented specific embodiment. However, the singular or plural expression is selected appropriately according to a situation presented for convenience of explanation, and the present disclosure is not limited to the singular or plural component, and even components expressed in the plural may be configured in the singular, or a component expressed in the singular may be configured in the plural.

According to various embodiments, one or more components or operations of the above-described components may be omitted, or one or more other components or operations may be added. Alternatively or additionally, a plurality of components (e.g., modules or programs) may be integrated into a single component. In such a case, the integrated component may still perform one or more functions of each of the plurality of components in the same or similar manner as they are performed by a corresponding one of the plurality of components before the integration. According to various embodiments, operations performed by the module, the program, or another component may be executed sequentially, in parallel, repeatedly, or heuristically, or one or more of the operations may be executed in a different order or omitted, or one or more other operations may be added.

Meanwhile, specific embodiments have been described in the detailed description of the present disclosure, and of course, various modifications are possible without departing from the scope of the present disclosure.

## Claims

1. An electronic device performed by a distributed unit (DU), comprising:

   at least one transceiver comprising a fronthaul transceiver,
   memory, comprising one or more storage media, storing instructions, and
   at least one processor comprising processor circuitry,
   wherein the instructions, when executed by the at least one processor individually or collectively, cause the electronic device to:

   transmit information comprising a plurality of synchronization signal/physical broadcast channel (SS/PBCH) blocks to a radio unit (RU),
   receive, based on a first beamforming parameter set among a plurality of beamforming parameter sets, a physical random access channel (PRACH) signal related to an SS/PBCH block selected by a terminal among the plurality of SS/PBCH blocks in a first association period among a plurality of association periods set for the plurality of SS/PBCH blocks through the RU, and
   receive, based on a second beamforming parameter set, distinct from the first beamforming parameter, among the plurality of beamforming parameter sets, the PRACH signal related to the selected SS/PBCH block in a second association period, distinct from the first association period, among the plurality of association periods through the RU.

2. The electronic device of claim 1, wherein each of the plurality of association periods comprises a plurality of random access channel (RACH) occasions, and
   wherein the plurality of RACH occasions correspond to the plurality of SS/PBCH blocks respectively.

3. The electronic device of claim 1, wherein the instructions, when executed by the at least one processor individually or collectively, cause the electronic device to:

   receive, based on each of the plurality of beamforming parameter sets, the PRACH signal through the RU,
   identify, based on a result of reception of the PRACH signal, one beamforming parameter set among the plurality of beamforming parameter sets, and
   control the RU to transmit a downlink signal through the identified beamforming parameter set to the terminal.

4. The electronic device of claim 3, wherein the downlink signal comprises a random access response (RAR) signal corresponding to the PRACH signal, a physical downlink control channel (PDCCH) signal, or a physical downlink shared channel (PDSCH) signal.

5. The electronic device of claim 1, wherein the plurality of association periods are related to the plurality of beamforming parameter sets respectively.

6. The electronic device of claim 1, wherein each of the plurality of association periods is set to 160 milliseconds (ms) or less.

7. An electronic device performed by a radio unit (RU), comprising:

at least one transceiver comprising a fronthaul transceiver,
memory, comprising one or more storage media, storing instructions, and
at least one processor comprising processing circuitry, and
wherein the instructions, when executed by the at least one processor individually and collectively, cause the electronic device to:

transmit, based on information comprising a plurality of synchronization signal/physical broadcast channel (SS/PBCH) blocks which is received from a distributed unit (DU), the plurality of SS/PBCH blocks to a terminal,
receive, based on a first beamforming parameter set among a plurality of beamforming parameter sets, a physical random access channel (PRACH) signal related to an SS/PBCH block selected by the terminal among the plurality of SS/PBCH blocks in a first association period among a plurality of association periods set for the plurality of SS/PBCH blocks, and
receive, based on a second beamforming parameter set, distinct from the first beamforming parameter, among the plurality of beamforming parameter sets, the PRACH signal related to the selected SS/PBCH block in a second association period, distinct from the first association parameter, among the plurality of association periods.

8. The electronic device of claim 7, wherein each of the plurality of association periods comprises a plurality of random access channel (RACH) occasions, and
wherein the plurality of RACH occasions correspond to the plurality of SS/PBCH blocks respectively.

9. The electronic device of claim 7, wherein the instructions, when executed by the at least one processor individually or collectively, cause the electronic device to:

based on each of the plurality of beamforming parameter sets, receive the PRACH signal,
receive from the DU, one beamforming parameter set among the plurality of beamforming parameter sets which is identified based on a result of reception of the PRACH signal, and
transmit a downlink signal to the terminal through the identified beamforming parameter set.

10. The electronic device of claim 9, wherein the downlink signal comprises a random access response (RAR) signal corresponding to the PRACH signal, a physical downlink control channel (PDCCH) signal, or a physical downlink shared channel (PDSCH) signal.

11. A method performed by a distributed unit (DU), comprising:

transmitting information comprising a plurality of synchronization signal/physical broadcast channel (SS/PBCH) blocks to a radio unit (RU),
receiving, based on a first beamforming parameter set among a plurality of beamforming parameter sets, a physical random access channel (PRACH) signal related to an SS/PBCH block selected by a terminal among the plurality of SS/PBCH blocks in a first association period among a plurality of association periods set for the plurality of SS/PBCH blocks through the RU, and
receiving, based on a second beamforming parameter set, distinct from the first beamforming parameter, among the plurality of beamforming parameter sets, the PRACH signal related to the selected SS/PBCH block in a second association period, distinct from the first association period, among the plurality of association periods through the RU.

12. The method of claim 11, wherein each of the plurality of association periods comprises a plurality of random access channel (RACH) occasions, and
wherein the plurality of RACH occasions correspond to the plurality of SS/PBCH blocks respectively.

13. The method of claim 11, wherein the method further comprises:

receiving, based on each of the plurality of beamforming parameter sets, the PRACH signal through the RU,
identifying, based on a result of reception of the PRACH signal, one beamforming parameter set among the plurality of beamforming parameter sets, and

controlling the RU to transmit a downlink signal through the identified beamforming parameter set to the terminal.

14. The method of claim 13, wherein the downlink signal comprises a random access response (RAR) signal corresponding to the PRACH signal, a physical downlink control channel (PDCCH) signal, or a physical downlink shared channel (PDSCH) signal.

15. A method performed by a radio unit (RU), comprising:

transmitting, based on information comprising a plurality of synchronization signal/physical broadcast channel (SS/PBCH) blocks which is received from a distributed unit (DU), the plurality of SS/PBCH blocks to a terminal, receiving, based on a first beamforming parameter set among a plurality of beamforming parameter sets, a physical random access channel (PRACH) signal related to an SS/PBCH block selected by the terminal among the plurality of SS/PBCH blocks in a first association period among a plurality of association periods set for the plurality of SS/PBCH blocks, and
receiving, based on a second beamforming parameter set, distinct from the first beamforming parameter, among the plurality of beamforming parameter sets, the PRACH signal related to the selected SS/PBCH block in a second association period, distinct from the first association period, among the plurality of association periods.

FIG. 1

110

210

215

220

DU

RU

FIG. 2A

FIG. 2B

210

DU

| TRANSCEIVER 310 | MEMORY 320 | PROCESSOR 330 |

FIG. 3A

220

RU

360

RF
TRANSCEIVER

365

FRONTHAUL
TRANSCEIVER

370

MEMORY

380

PROCESSOR

FIG. 3B

DL

Ant ← RF ← Ant | iFFT & CP Add ← Ant | Digital BF (Precoding) ← Layer | RE mapping ← Layer | Ant.Port mapping

Layer mapping

DL data

Modulation ← ch.Encoding /Scrambling ← MAC

405 410 420a 420b 425 430 440

Ant → RF → Ant | CP Removal & FFT → Ant | Digital BF (UL Pre-combining) → Rx path | RE de-mapping → Rx path | Ch. estimate

UL

Layer de-mapping

Demodulation → Decoding /Descramble → UL data → MAC

FIG. 4

FIG. 5A

FIG. 5B

FIG. 6

FIG. 7

FIG. 8

FIG. 9

FIG. 10

FIG. 11A

FIG. 11B

110

120

PLURALITY OF SSBS ~1201

~1202

SSB SELECTION

PRACH ~1203

FIRST ASSOCIATION PERIOD

RECEIVE PRACH BASED ON LB #0 ~1204

PRACH ~1205

SECOND ASSOCIATION PERIOD

RECEIVE PRACH BASED ON LB #1 ~1206

PRACH ~1207

N-TH ASSOCIATION PERIOD

RECEIVE PRACH BASED ON LB #N-1 ~1208

FIG. 12

TRANSMIT INFORMATION INCLUDING PLURALITY OF
SS/PBCH BLOCKS TO RU ⌇1310

RECEIVE, THROUGH RU, PRACH SIGNAL FOR SS/PBCH BLOCK SELECTED
BY TERMINAL AMONG PLURALITY OF SS/PBCH BLOCKS IN
FIRST ASSOCIATION PERIOD AMONG PLURALITY OF ASSOCIATION PERIODS,
BASED ON FIRST BEAMFORMING PARAMETER SET AMONG
PLURALITY OF BEAMFORMING PARAMETER SETS ⌇1320

RECEIVE, THROUGH RU, PRACH SIGNAL FOR SS/PBCH BLOCK SELECTED
BY TERMINAL AMONG PLURALITY OF SS/PBCH BLOCKS IN
SECOND ASSOCIATION PERIOD AMONG PLURALITY OF ASSOCIATION PERIODS,
BASED ON SECOND BEAMFORMING PARAMETER SET AMONG
PLURALITY OF BEAMFORMING PARAMETER SETS ⌇1330

FIG. 13

```
┌─────────────────────────────────────────────────┐
│                                                 │
│   TRANSMIT PLURALITY OF SS/PBCH BLOCKS TO TERMINAL │────1410
│                                                 │
└─────────────────────────────────────────────────┘
                        │
                        ▼
┌─────────────────────────────────────────────────┐
│        RECEIVE PRACH SIGNAL FOR SS/PBCH BLOCK SELECTED       │
│    BY TERMINAL AMONG PLURALITY OF SS/PBCH BLOCKS IN FIRST     │
│  ASSOCIATION PERIOD AMONG PLURALITY OF ASSOCIATION PERIODS,   │────1420
│          BASED ON FIRST BEAMFORMING PARAMETER SET            │
│          AMONG PLURALITY OF BEAMFORMING PARAMETER SETS        │
└─────────────────────────────────────────────────┘
                        │
                        ▼
┌─────────────────────────────────────────────────┐
│        RECEIVE PRACH SIGNAL THE SS/PBCH BLOCK SELECTED       │
│      BY TERMINAL IN SECOND ASSOCIATION PERIOD AMONG          │
│   PLURALITY OF ASSOCIATION PERIODS, BASED ON SECOND          │────1430
│       BEAMFORMING PARAMETER SET AMONG PLURALITY OF           │
│            BEAMFORMING PARAMETER SETS                        │
└─────────────────────────────────────────────────┘
```

FIG. 14

## INTERNATIONAL SEARCH REPORT

| International application No. |
|---|
| **PCT/KR2024/016837** |

### A. CLASSIFICATION OF SUBJECT MATTER

**H04B 7/06**(2006.01)i; **H04B 7/08**(2006.01)i; **H04W 74/00**(2009.01)i; **H04W 72/23**(2023.01)i; **H04W 72/1273**(2023.01)i; **H04W 74/0833**(2024.01)i; **H04W 88/08**(2009.01)i

According to International Patent Classification (IPC) or to both national classification and IPC

### B. FIELDS SEARCHED

Minimum documentation searched (classification system followed by classification symbols)

H04B 7/06(2006.01); H04B 7/0456(2017.01); H04L 65/40(2022.01); H04L 69/32(2022.01); H04W 28/18(2009.01); H04W 48/08(2009.01); H04W 74/08(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 빔포밍(beamforming), DU(distributed unit), SS/PBCH(synchronization signal/physical broadcast channel), RU(radio unit), 연관 주기(association period), PRACH(physical random access channel), 파라미터 셋(parameter set), RACH 공간(occasion)

### C. DOCUMENTS CONSIDERED TO BE RELEVANT

| Category* | Citation of document, with indication, where appropriate, of the relevant passages | Relevant to claim No. |
|---|---|---|
| Y | KR 10-2023-0128701 A (TJ INNOVATION CO., LTD.) 05 September 2023 (2023-09-05)<br>See paragraphs [0021], [0037]-[0054], [0061] and [0070]-[0075]; and figures 1 and 3-5. | 1-15 |
| Y | KR 10-2020-0098700 A (SAMSUNG ELECTRONICS CO., LTD.) 20 August 2020 (2020-08-20)<br>See paragraphs [0055]-[0056] and [0098]-[0099]. | 1-15 |
| Y | KR 10-2023-0051499 A (QUALCOMM INCORPORATED) 18 April 2023 (2023-04-18)<br>See paragraphs [0006] and [0058]-[0059]; and claim 14. | 2,6,8,12 |
| A | WO 2023-028935 A1 (MAVENIR SYSTEMS, INC. et al.) 09 March 2023 (2023-03-09)<br>See claims 1-17. | 1-15 |
| A | KR 10-2023-0127915 A (ELECTRONICS AND TELECOMMUNICATIONS RESEARCH INSTITUTE) 01 September 2023 (2023-09-01)<br>See claims 1-10. | 1-15 |

☐ Further documents are listed in the continuation of Box C.   ☑ See patent family annex.

| | |
|---|---|
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **24 February 2025** | **24 February 2025** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2024/016837**

| Patent document cited in search report | | | Publication date (day/month/year) | Patent family member(s) | | | Publication date (day/month/year) |
|---|---|---|---|---|---|---|---|
| KR | 10-2023-0128701 | A | 05 September 2023 | JP | 2024-512831 | A | 21 March 2024 |
| | | | | JP | 7538239 | B2 | 21 August 2024 |
| | | | | US | 2024-0214055 | A1 | 27 June 2024 |
| | | | | WO | 2023-163259 | A1 | 31 August 2023 |
| KR | 10-2020-0098700 | A | 20 August 2020 | CN | 111567018 | A | 21 August 2020 |
| | | | | CN | 111567018 | B | 10 October 2023 |
| | | | | CN | 117220763 | A | 12 December 2023 |
| | | | | EP | 3723348 | A1 | 14 October 2020 |
| | | | | EP | 3723348 | B1 | 28 December 2022 |
| | | | | EP | 4167538 | A1 | 19 April 2023 |
| | | | | US | 11456833 | B2 | 27 September 2022 |
| | | | | US | 11824626 | B2 | 21 November 2023 |
| | | | | US | 2020-0358575 | A1 | 12 November 2020 |
| | | | | US | 2022-0407593 | A1 | 22 December 2022 |
| | | | | WO | 2019-135656 | A1 | 11 July 2019 |
| KR | 10-2023-0051499 | A | 18 April 2023 | BR | 112023002286 | A2 | 14 March 2023 |
| | | | | CN | 116097875 | A | 09 May 2023 |
| | | | | EP | 4201145 | A1 | 28 June 2023 |
| | | | | US | 2022-0061099 | A1 | 24 February 2022 |
| | | | | WO | 2022-040462 | A1 | 24 February 2022 |
| WO | 2023-028935 | A1 | 09 March 2023 | EP | 4397076 | A1 | 10 July 2024 |
| | | | | US | 2024-0196445 | A1 | 13 June 2024 |
| KR | 10-2023-0127915 | A | 01 September 2023 | US | 2023-0276504 | A1 | 31 August 2023 |

Form PCT/ISA/210 (patent family annex) (July 2022)